# EUROPEAN PATENT APPLICATION

(11) **EP 2 495 981 A1**
(43) Date of publication of application: **05.09.2012**
(21) Application number: 11828909.9
(22) Date of filing: 22.09.2011
(51) Int. Cl.: H04N 13/00, H04N 7/025, H04N 7/03, H04N 7/035

(54) **3D-IMAGE DATA TRANSMITTING DEVICE, 3D-IMAGE DATA TRANSMITTING METHOD, 3D-IMAGE DATA RECEIVING DEVICE AND 3D-IMAGE DATA RECEIVING METHOD**

(30) Priority: 01.10.2010 JP 2010224417
(71) Applicant: Sony Corporation, Tokyo 108-0075 (JP)
(72) Inventor: TSUKAGOSHI, Ikuo, Tokyo 108-0075 (JP)
(74) Representative: Beder, Jens
(86) International application number: PCT/JP2011/071564
(87) International publication number: WO 2012/043352

(57) **Abstract**

[Solution] A subtitle processing unit 123 converts two-dimensional image subtitle data into stereoscopic image subtitle data conforming to the transmission format of stereoscopic image data. The reception side can readily generate, based on the stereoscopic image subtitle data, the display data of a left eye subtitle to be superimposed on left eye image data that stereoscopic image data has, and the display data of a right eye subtitle to be superimposed on right eye image data that the stereoscopic image data has, which realizes facilitation of processing. Display control information including the area information of sub regions set as the display areas of left eye and right eye subtitles, target frame information, and disparity information is transmitted in addition to the stereoscopic image data, and stereoscopic image subtitle data. Disparity to be provided to left eye and right eye subtitles can dynamically be changed in sync with change in the contents of an image. Shift information is generated with sub pixel precision.

## Description

### Technical Field

The present invention relates to a stereoscopic image data transmission device, a stereoscopic image data transmission method, a stereoscopic image data reception device, and a stereoscopic image data reception method, and specifically relates to a stereoscopic image data transmission device which transmits the data of superimposed information such as captions and so forth along with stereoscopic image data, and so forth.

### Background Art

For example, with PTL 1, a transmission system using the television broadcast electric waves of stereoscopic image data has been proposed. With this transmission system, stereoscopic image data having image data for the left eye, and image data for the right eye is transmitted, and stereoscopic image display using binocular disparity is performed.

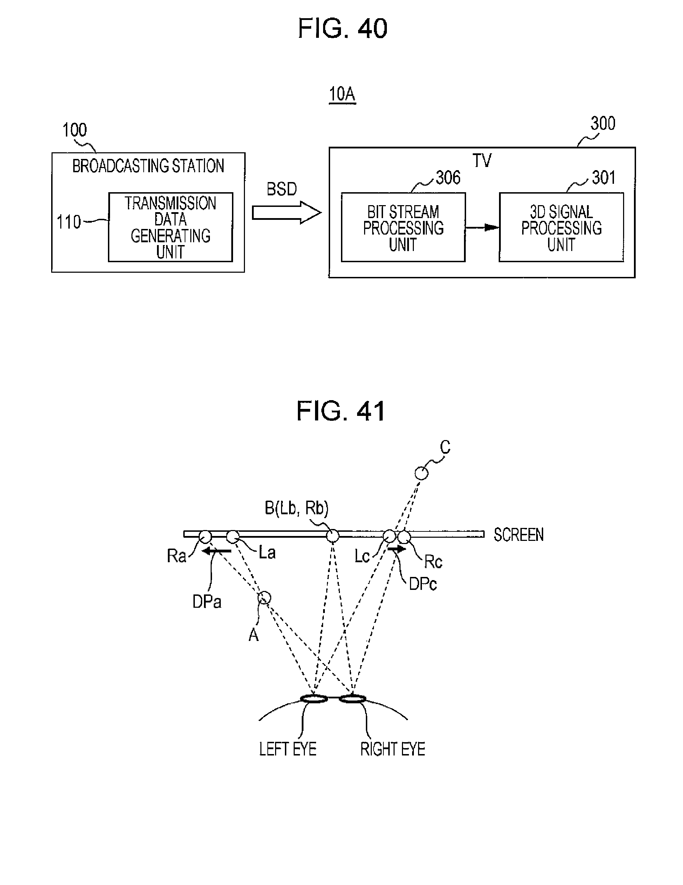

Fig. 41 illustrates a relation between the display positions of a left image and a right image of an object (substance) on a screen, and the playback position of a stereoscopic image thereof with stereoscopic image display using binocular disparity. For example, with regard to an object A where a left image La is displayed by being shifted to the right side, and a right image Ra is displayed by being shifted to the left side on the screen as shown in the drawing, left and right lines of sight intersect nearer to the viewer than the screen surface, and accordingly, the playback position of the stereoscopic image thereof is nearer to the viewer than the screen surface. DPa represents a disparity vector in the horizontal direction relating to the object A.

Also, for example, with regard to an object B where the left image Lb and the right image Rb are displayed on the same position on the screen as shown in the drawing, the left and right lines of sight intersect on the screen surface, and accordingly the playback position of the stereoscopic image thereof is on the screen surface. Further, for example, with regard to an object C where the left eye Lc is displayed by being shifted to the left side, and the right eye Rc is displayed by being shifted to the right side on the screen as shown in the drawing, the left and right lines of sight intersect deeper than the screen surface, and accordingly, the playback position of the stereoscopic image thereof is deeper than the screen surface. DPc represents a disparity vector in the horizontal direction relating to the object C.

Heretofore, the side by side (Side By Side) system, top and bottom (Top & Bottom) system, and so forth have been known as transmission formats of stereoscopic image data. When the reception side is, for example, a set top box, it can be conceived that received stereoscopic image data is transmitted to a monitor device such as a television receiver via a digital interface such as HDMI (High-Definition Multimedia Interface) or the like without conversion of the transmission format. For example, the details of the HDMI standard are described in NPL 1.

Also, heretofore, it has been known to transmit, from the transmission side, the data of superimposed information such as captions and so forth, along with two-dimensional image data. In this case, with the reception side, the data of the superimposed information is processed to generate display data for displaying superimposed information, and display data is superimposed on the two-dimensional imaged data, thereby obtaining a two-dimensional image where the superimposed information is superimposed and displayed.

### Citation List

### Patent Literature

PTL 1: Japanese Unexamined Patent Application Publication No. 2005-6114

### Non Patent Literature

NPL 1: High-Definition Multimedia Interface Specification Version 1.4, June 52009

### Summary of Invention

### Technical Problem

As described above, at the time of transmitting stereoscopic image data as well, it can be conceived to transmit the data of superimposed information such as captions and so forth. In the event that the data of superimposed information is for a two-dimensional image, for example, a set top box as described above has to perform processing for generating display data to be superimposed on stereoscopic image data in accordance with the transmission format of the stereoscopic image data, from the data of superimposed information for the two-dimensional image. Therefore, such an advanced processing function is needed as a set top box for receiving stereoscopic image data, which leads to increase in costs.

An object of the present invention is to facilitate processing on the reception side at the time of transmitting the data of superimposed information such as captions and so forth along with stereoscopic image data.

### Solution to Problem

A conception of the present invention is a stereoscopic image data transmission device including: an image data output unit configured to output stereoscopic image data in a predetermined transmission format having left eye image data and right eye image data; a superimposed information data output unit configured to output the data of superimposed information to be superimposed on an image made up of the left eye image data and the right eye image data; a superimposed information data processing unit configured to convert the data of the superimposed information output from the superimposed information data output unit into superimposed information data for transmission having the data of left eye superimposed information corresponding to the left eye image data included in the stereoscopic image data in the predetermined transmission format, and the data of right eye superimposed information corresponding to the right eye image data included in the stereoscopic image data in the predetermined transmission format; a display control information generating unit configured to set a first display area corresponding to the display position of the left eye superimposed information, and a second display area corresponding to the display position of the right eye superimposed information to the inside of the display area of the superimposed information data for transmission output from the superimposed information data processing unit, and to generate display control information including the area information of each of the first display area and the second display area, the information of a target frame for displaying each superimposed information included in the first display area and the second display area, and disparity information for shift-adjusting each display position of superimposed information included in the first display area and the second display area; and a data transmission unit configured to transmit a multiplexed data stream having a first data stream including the stereoscopic image data output from the image data output unit, and a second data stream including the superimposed information data for transmission output from the superimposed information data processing unit and the display control information generated at the display control information generating unit.

With the present invention, stereoscopic image data in a predetermined transmission format having left eye image data and right eye image data is output by the image data output unit. The transmission format of stereoscopic image data is, for example, the side by side (Side By Side) system, top and bottom (Top & Bottom) system, and so forth.

The data of superimposed information to be superimposed on an image made up of left eye image data and right eye image data is output by the superimposed information data output unit. Here, the superimposed information is information such as captions, graphics, text, and so forth to be superimposed on an image. The data of superimposed information is converted into superimposed information data for transmission having the data of left eye superimposed information and the data of right eye superimposed information by the superimposed information data processing unit.

Here, the data of left eye superimposed information is data corresponding to left eye image data included in the stereoscopic image data in the predetermined transmission format described above, and is data for generating the display data of left eye superimposed information to be superimposed on left eye image data that the stereoscopic image data has on the reception side. Also, the data of right eye superimposed information is data corresponding to right eye image data included in the stereoscopic image data in the predetermined transmission format described above, and is data for generating the display data of right eye superimposed information to be superimposed on right eye image data that the stereoscopic image data has on the reception side.

The data of superimposed information is, for example, subtitle data (DVB subtitle data). The data of left eye superimposed information, and the data of right eye superimposed information are generated at the superimposed information data processing unit as follows. For example, in the event that the transmission system of stereoscopic image data is the Side By Side system, the data of left eye superimposed information, and the data of right eye superimposed information are generated at the superimposed information data processing unit as the data of a different object in the same region. Also, for example, in the event that the transmission system of stereoscopic image data is the Top & Bottom system, the data of left eye superimposed information, and the data of right eye superimposed information are generated at the superimposed information data processing unit as the data of an object in different regions.

For example, the stereoscopic image data transmission device may further include: a disparity information output unit configured to output disparity information between a left eye image made up of the left eye image data, and a right eye image made up of the right eye image data; with the superimposed information data processing unit shifting, based on the disparity information output from the disparity information output unit, at least the left eye superimposed information or the right eye superimposed information to provide disparity between this left eye superimposed information and this right eye superimposed information. In this case, at the reception side, consistency of perspective as to each object within an image can be kept in the optimal state with display of superimposed information such as captions and so forth without performing processing for providing disparity between the left eye superimposed information and the right eye superimposed information.

According to the display control information generating unit, a first display area corresponding to the display position of left eye superimposed information, and a second display area corresponding to the display position of right eye superimposed information are set to the inside of the display area of superimposed information data for transmission, and display control information relating to these first and second display areas is generated. These first and second display areas are set according to a user's operations or automatically, for example.

The area information of the first display area, and the area information of the second display area are included in this display control information. Also, the information of a target frame for displaying superimposed information included in the first display area, and the information of a target frame for displaying superimposed information included in the second display area are included in this display control information. Further, disparity information for shift-adjusting the display position of superimposed information included in the first display area, and disparity information for shift-adjusting the display position of superimposed information included in the second display area are included in this display control information. These kinds of disparity information are for providing disparity between the superimposed information included in the first display area, and the superimposed information included in the second display area.

For example, the stereoscopic image data transmission device may further include: a disparity information output unit configured to output disparity information between a left eye image made up of the left eye image data, and a right eye image made up of the right eye image data; with the display control information generating unit obtaining, based on the disparity information output from the disparity information output unit, disparity information for shift-adjusting each display position of superimposed information included in the first display area and the second display area.

A multiplexed data stream including a first data stream and a second data stream is transmitted by the data transmission unit. The stereoscopic image data in a predetermined transmission format output from the image data output unit is included in the first data stream. Also, the superimposed information data for transmission output from the superimposed information data processing unit, and the display control information generated at the display control information generating unit are included in the second data stream.

In this way, with the present invention, stereoscopic image data, and also the superimposed information data for transmission having the data of left eye information, and the data of right eye information conforming to the transmission format thereof are transmitted. Therefore, the reception side can readily generate the display data of left eye superimposed information to be superimposed on the left eye image data that the stereoscopic image data has, and the display data of right eye superimposed information to be superimposed on the right eye image data that the stereoscopic image data has, based on the superimposed information data for transmission, whereby facilitation of processing can be realized.

Also, with the present invention, in addition to stereoscopic image data and superimposed information data for transmission, display control information (area information, target frame information, disparity information) relating to the first display area corresponding to the display position of left eye superimposed information, and the second display area corresponding to the display position of right eye superimposed information is transmitted. The reception side is allowed to superimpose only the superimposed information of the first display area and the second display area on the target frames for display, respectively. Disparity can be provided to the display position of the superimposed information of the first display area and the second display area, and with display of superimposed information such as captions and so forth, consistency of perspective as to each object within an image can be kept in the optimal state.

Note that, with the present invention, for example, the disparity information included in the display control information generated at the display control information generating unit may have sub pixel precision. In this case, at the reception side, in the event of shift-adjusting the display position of the superimposed information of the first display area and the second display area using disparity information that is sequentially updated during a superimposed information display period, shift operation thereof can be smoothed, which contributes to improvement in image quality.

Also, with the present invention, for example, command information for controlling on/off of each display of superimposed information included in the first display area and the second display area may further be included in the display control information generated at the display control information generating unit. In this case, the reception side is allowed, based on the command information, to turn on or off display of the superimposed information of the first display area and the second display area using the command information thereof, and also the area information and disparity information included in the display control information.

Also, with the present invention, for example, the data transmission unit may insert identification information for identifying that the superimposed information data for transmission conforming to the transmission format of the stereoscopic image data is included in the second data stream into the multiplexed data stream. In this case, the reception side is allowed to identify whether or not the superimposed information data for transmission (stereoscopic image superimposed information data) conforming to the transmission format of stereoscopic image data is included in the second data stream by this identification information.

Also, with the present invention, for example, an arrangement may be made wherein the data of the superimposed information is subtitle data, the display area of the superimposed information data is a region, and the first display area and the second display area are sub regions set so as to be included in the region. Here, the sub region areas are areas to be newly defined.

Also, with another conception of the present invention is a stereoscopic image data reception device including: a data reception unit configured to receive a multiplexed data stream having a first data stream and a second data stream; with the first data stream including stereoscopic image data in a predetermined transmission format having left eye image data and right eye image data, the second data stream including superimposed information data for transmission and display control information, the superimposed information data for transmission having the data of left eye superimposed information corresponding to the left eye image data, and the data of right eye superimposed information corresponding to the right eye image data included in the stereoscopic image data in the predetermined transmission format, and the display control information having each area information of a first display area corresponding to the display position of the left eye superimposed information and a second display area corresponding to the display position of the right eye superimposed information set to the inside of the display area of the superimposed information data for transmission, the information of a target frame for displaying each superimposed information included in the first display area and the second display area, and disparity information for shift-adjusting each display position of superimposed information included in the first display area and the second display area; further including: an image data obtaining unit configured to obtain the stereoscopic image data from the first data stream that the multiplexed data stream received at the data reception unit has; a superimposed information data obtaining unit configured to obtain the superimposed information data for transmission from the second data stream that the multiplexed data stream received at the data reception unit has; a display control information obtaining unit configured to obtain the display control information from the second data stream that the multiplexed data stream received at the data reception unit has; a display data generating unit configured to generate display data for superimposing and displaying left eye superimposed information and right eye superimposed information as to each of a left eye image and a right eye image based on the superimposed information data for transmission obtained at the superimposed information data obtaining unit; a display data extracting unit configured to extract the display data of the first display area and the second display area of the display data generated at the display data generating unit based on the area information of the first display area and the second display area that the display control information obtained at the display control information obtaining unit has; a shift adjusting unit configured to shift-adjusting the position of the display data of the first display area and the second display area extracted at the display data extracting unit based on the disparity information that the display control information obtained at the display control information obtaining unit has; and a data synthesizing unit configured to superimpose each display data of the first display area and the second display area shift-adjusted at the shift adjusting unit on, of the stereoscopic image data obtained at the image data obtaining unit, the target frame indicated by the target frame information that the display control information obtained at the display control information obtaining unit has, to obtain output stereoscopic image data.

With the present invention, a multiplexed data stream having a first data stream and a second data stream is received by the data reception unit. The stereoscopic image data in a predetermined transmission format having left eye image data and right eye image data is included in the first data stream.

Superimposed information data for transmission having the data of left eye superimposed information and the data of right eye superimposed information (stereoscopic image superimposed information data) is included in the second data stream. The data of left eye superimposed information is data corresponding to left eye image data included in the above stereoscopic image data in a predetermined transmission format, and is data for generating the display data of left eye superimposed information to be superimposed on the left eye image data that the stereoscopic image data has. Similarly, the data of right eye superimposed information is data corresponding to right eye image data included in the above stereoscopic image data in a predetermined transmission format, and is data for generating the display data of right eye superimposed information to be superimposed on the right eye image data that the stereoscopic image data has.

Also, the display control information is included in the second data stream. The area information of each of the first display area corresponding to the display position of left eye superimposed information, and the second display area corresponding to right eye superimposed information set to the inside of the display area of the superimposed information data for transmission is included in this display control information. Also, the information of a target frame for displaying each of the superimposed information included in the first display area and the second display area is included in this display control information. Further, disparity information for shift-adjusting each display position of superimposed information included in the first display area and the second display area is included in this display control information.

Stereoscopic image data in a predetermined transmission format is obtained from the first data stream that the multiplexed data stream received at the data reception unit has by the image data obtaining unit. Also, superimposed information data for transmission is obtained from the second data stream that the multiplexed data stream received at the data reception unit has by the superimposed information data obtaining unit. Further, display control information is obtained from the second data stream that the multiplexed data stream received at the data reception unit has by the display control information obtaining unit.

Display data for superimposing superimposed information on a left eye image and a right eye image for display is generated by the display data generating unit based on the superimposed information data for transmission obtained at the superimposed information data obtaining unit. The display data of the first display area and the second display area are then extracted by the display data extracting unit based on the area information of the first display area and the second display area that the display control information has of the display data generated at the display data generating unit. The display data thus extracted serves as a display object.

The positions of the display data of the first display area and the second display area extracted by the display data extracting unit is shift-adjusted by the shift adjusting unit based on the disparity information that the display control information, obtained at the display control information obtaining unit, has. Each display data of the first display area and the second display area shift-adjusted by the shift adjusting unit is then superimposed on the target frame that the information of the target frame obtained at the display control information obtaining unit of the stereoscopic image data obtained at the image data obtaining unit by the data synthesizing unit, and output stereoscopic image data is obtained. This output stereoscopic image data is transmitted to an external device by the digital interface unit, for example, such as HDMI or the like. Alternatively, display of a left eye image and a right eye image for allowing the user to perceive a stereoscopic image is performed on a display panel by this output stereoscopic image data.

In this way, with the present invention, stereoscopic image data, and also superimposed information data for transmission having the data of left eye superimposed information and the data of right eye superimposed information corresponding to a transmission format thereof are received. Therefore, based on the superimposed information data for transmission, the display data of left eye superimposed information to be superimposed on left eye image data that the stereoscopic image data has, and the display data of right eye superimposed information to be superimposed on right eye image data that the stereoscopic image data has can readily be generated, and facilitation of processing can be realized.

Also, with the present invention, in addition to stereoscopic image data and superimposed information data for transmission, display control information relating to the first display area corresponding to the display position of left eye superimposed information, and the second display area corresponding to the display position of right eye superimposed information (area information, target frame information, disparity information) is received. Therefore, only the superimposed information of the first display area and the second display area can be superimposed on the target frames for display, respectively. Disparity can be provided to the display position of the superimposed information of the first display area and the second display area, and with display of superimposed information such as captions and so forth, consistency of perspective as to each object within an image can be kept in the optimal state.

Note that, with the present invention, for example, an arrangement may be made wherein the multiplexed data stream received at the data reception unit includes identification information for identifying that the superimposed information data for transmission conforming to the transmission format of stereoscopic image data is included in the second data stream, and there are further provided an identification information obtaining unit configured to obtain identification information from the multiplexed data stream received at the data reception unit, and a superimposed information data identifying unit configured to identify that the superimposed information data for transmission conforming to the transmission format of the stereoscopic image data is included in the second data stream, based on the identification information obtained at the identification information obtaining unit. In this case, according to this identification information, it can be identified whether or not superimposed information data for transmission conforming to the transmission format of the stereoscopic image data (stereoscopic image superimposed information data) is included in the second data stream. Advantageous Effects of Invention

According to the present invention, stereoscopic image data, and also superimposed information data for transmission having the data of left eye superimposed information, and the data of right superimposed information corresponding to a transmission format thereof are transmitted from the transmission side to the reception side. Therefore, the reception side can readily generate the display data of left eye superimposed information to be superimposed on left eye image data that the stereoscopic image data has, and the display data of right eye superimposed information to be superimposed on right eye image data that the stereoscopic image data has, based on the superimposed information data for transmission, and facilitation of processing is realized.

Also, according to the present invention, in addition to stereoscopic image data and superimposed information data for transmission, display control information (area information, target frame information, disparity information) relating to the first display area corresponding to the display position of left eye superimposed information, and the second display area corresponding to the display position of right eye superimposed information is transmitted. The reception side can superimpose only the superimposed information of these first display area and second display area on the target frame for display, respectively. Disparity can be provided to the display position of the superimposed information of these first display area and second display area, and with display of superimposed information such as captions and so forth, consistency of perspective as to each object within an image can be kept in the optimal state.

### Brief Description of Drawings

[Fig. 1] Fig. 1 is a block diagram illustrating a configuration example of an image transmission/reception system serving as an embodiment of the present invention.
[Fig. 2] Fig. 2 is a block diagram illustrating a configuration example of a transmission data generating unit in a broadcasting station.
[Fig. 3] Fig. 3 is a diagram illustrating image data in a 1920×1080-pixel format.
[Fig. 4] Fig. 4 is a diagram for describing "Top & Bottom" system, "Side By Side" system, and "Frame Sequential" system that are stereoscopic image data (3D image data) transmission systems.
[Fig. 5] Fig. 5 is a diagram for describing an example for detecting the disparity vector of a right eye image corresponding to a left eye image.
[Fig. 6] Fig. 6 is a diagram for describing obtaining of a disparity vector using the block matching method.
[Fig. 7] Fig. 7 is a diagram for describing downsizing processing that is performed at a disparity information creating unit of the transmission data generating unit.
[Fig. 8] Fig. 8 is a diagram for describing that shift information has sub-pixel precision, i.e., shift information is made up of an integer part and a decimal fractional part.
[Fig. 9] Fig. 9 is a diagram illustrating a configuration example of a transport stream (bit stream data) including a video elementary stream, a subtitle elementary stream, and an audio elementary stream.
[Fig. 10] Fig. 10 is a diagram illustrating the structure of PCS (page_composition_segment) making up subtitle data.
[Fig. 11] Fig. 11 is a diagram illustrating a correspondence relation between each value of "segment_type" and a segment type.
[Fig. 12] Fig. 12 is a diagram for describing information indicating the format of a subtitle for 3D that is newly defined (Component_type = 0x15, 0x25).
[Fig. 13] Fig. 13 is a diagram for describing a configuration example of subtitle data (including display control information) that is created and transmitted at a subtitle processing unit.
[Fig. 14] Fig. 14 is a diagram for describing on/off control of display according to command information included in an SCS (subregion composition_segment) segment.
[Fig. 15] Fig. 15 is a diagram for describing on/off control of display according to command information included in the SCS segment.
[Fig. 16] Fig. 16 is a diagram for describing a display state in the event that there is no on/off control of display according to command information included in the SCS segment. a diagram for describing configuration examples (cases A to E) of le data (including disparity information groups).
[Fig. 17] Fig. 17 is a diagram conceptually illustrating a creation method of stereoscopic image subtitle data in the event that the transmission format of stereoscopic image data is the Side By Side system.
[Fig. 18] Fig. 18 is a diagram illustrating an example of a region (region) and an object (object), and further a sub region (Subregion) according to stereoscopic image subtitle data.
[Fig. 19] Fig. 19 is a diagram illustrating a creation example (example 1) of each segment of stereoscopic image subtitle data in the event that the transmission format of stereoscopic image data is the Side By Side system.
[Fig. 20] Fig. 20 is a diagram illustrating a creation example (example 2) of each segment of stereoscopic image subtitle data in the event that the transmission format of stereoscopic image data is the Side By Side system.
[Fig. 21] Fig. 21 is a diagram conceptually illustrating a creation method of stereoscopic image subtitle data in the event that the transmission format of stereoscopic image data is the Top & Bottom system.
[Fig. 22] Fig. 22 is a diagram illustrating an example of a region (region) and an object (object), and further a sub region (Subregion) according to stereoscopic image subtitle data.
[Fig. 23] Fig. 23 is a diagram illustrating a creation example (example 1) of each segment of stereoscopic image subtitle data in the event that the transmission format of stereoscopic image data is the Top & Bottom system.
[Fig. 24] Fig. 24 is a diagram illustrating a creation example (example 2) of each segment of stereoscopic image subtitle data in the event that the transmission format of stereoscopic image data is the Top & Bottom system.
[Fig. 25] Fig. 25 is a diagram conceptually illustrating a creation method of stereoscopic image subtitle data in the event that the transmission format of stereoscopic image data is the Frame sequential system.
[Fig. 26] Fig. 26 is a diagram illustrating an example of a region (region) and an object (object), and further a sub region (Subregion) according to stereoscopic image subtitle data.
[Fig. 27] Fig. 27 is a diagram illustrating a creation example (example 1) of each segment of stereoscopic image subtitle data in the event that the transmission format of stereoscopic image data is the Frame sequential system.
[Fig. 28] Fig. 28 is a diagram illustrating a creation example (example 2) of each segment of stereoscopic image subtitle data in the event that the transmission format of stereoscopic image data is the Frame sequential system.
[Fig. 29] Fig. 29 is a diagram illustrating a structure example (syntax) of SCS (Subregion composition segment).
[Fig. 30] Fig. 30 is a diagram illustrating a structure example (syntax) of "Subregion_payload()" included in SCS.
[Fig. 31] Fig. 31 is a diagram illustrating principal data stipulation contents (semantics) of SCS.
[Fig. 32] Fig. 32 is a diagram schematically illustrating the flow of stereoscopic image data (Side By Side system) and subtitle data (including display control information).
[Fig. 33] Fig. 33 is a diagram schematically illustrating the flow of stereoscopic image data (MVC system) and subtitle data (including display control information).
[Fig. 34] Fig. 34 is a diagram illustrating a display example of a caption on an image, and perspective of background, a closeup view object, and the caption.
[Fig. 35] Fig. 35 is a diagram illustrating a display example of a caption on an image, and a left eye caption LGI and a right eye caption RGI for displaying the captions.
[Fig. 36] Fig. 36 is a block diagram illustrating a configuration example of a set top box making up the image transmission/reception system.
[Fig. 37] Fig. 37 is a block diagram illustrating a configuration example of a bit stream processing unit making up the set top box.
[Fig. 38] Fig. 38 is a diagram schematically illustrating an interpolation processing example in the event of performing 1/2 pixel (pixel) worth of shift in the horizontal direction at the set top box.
[Fig. 39] Fig. 39 is a block diagram illustrating a configuration example of a television receiver making up the image transmission/reception system.
[Fig. 40] Fig. 40 is a block diagram illustrating another configuration example of the image transmission/reception system.
[Fig. 41] Fig. 41 is a diagram for describing, with stereoscopic image display using binocular disparity, a relation between the display positions of the left and right images of an object on the screen, and the playback position of a stereoscopic image thereof.

### Description of Embodiments

A mode for implementing the present invention (hereafter, referred to as "embodiment") will be described below. Note that description will be made in accordance with the following sequence.

### 1. Embodiment

### 2. Modification

### 1. Embodiment

### Configuration Example of Image Transmission/Reception System

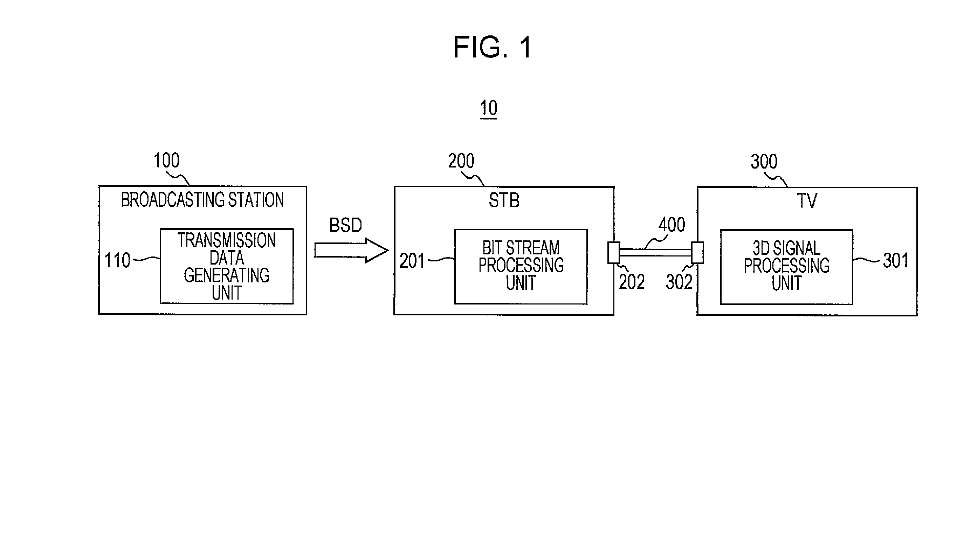

Fig. 1 illustrates a configuration example of an image transmission/reception system 10 serving as an embodiment. This image transmission/reception system 10 includes a broadcasting station 100, a set top box (STB) 200, and a television receiver (TV) 300.

The set top box 200 and television receiver 300 are connected by the HDMI (High-Definition Multimedia Interface) digital interface. The set top box 200 and television receiver 300 are connected with an HDMI cable 400. An HDMI terminal 202 is provided to the set top box 200. An HDMI terminal 302 is provided to the television receiver 300. One end of the HDMI cable 400 is connected to the HDMI terminal 202 of the set top box 200, and the other end of this HDMI cable 400 is connected to the HDMI terminal 302 of the television receiver 300.

### Description of Broadcasting Station

A broadcasting station 100 transmits bit stream data BSD over broadcast waves. The broadcasting station 100 includes a transmission data generating unit 110 for generating bit stream data BSD. Stereoscopic image data, audio data, the data of superimposed information, and so forth are included in this bit stream data BSD. Stereoscopic image data has a predetermined transmission format, and has left eye image data and right eye image data for displaying a stereoscopic image. Superimposed information is generally a caption, graphics information, text information, and so forth, and will be a subtitle (caption) in the present embodiment.

### Configuration Example of Transmission Data Generating Unit

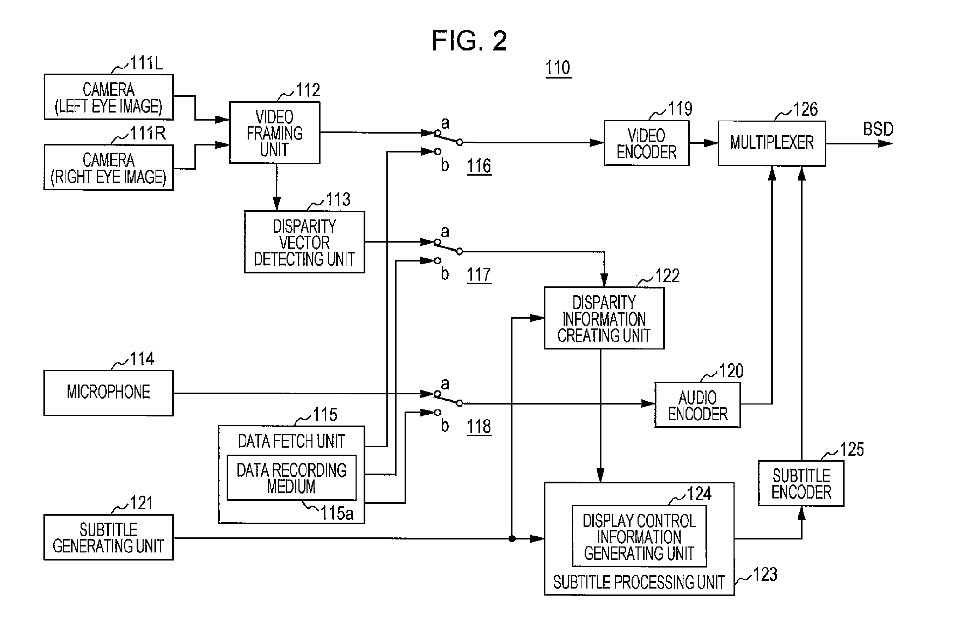

Fig. 2 illustrates a configuration example of a transmission data generating unit 110 in the broadcasting station 100. This transmission data generating unit 110 includes cameras 111L and 111R, a video framing unit 112, a disparity vector detecting unit 113, a microphone 114, a data extracting unit 115, and switchover switches 116 through 118. Also, this transmission data generating unit 110 includes a video encoder 119, an audio encoder 120, a subtitle generating unit 121, a disparity information creating unit 122, a subtitle processing unit 123, a subtitle encoder 125, and a multiplexer 125.

The camera 111L takes a left eye image to obtain left eye image data for displaying a stereoscopic image. The camera 111R takes a right eye image to obtain right eye image data for displaying a stereoscopic image. The video framing unit 112 subjects the left eye image data obtained at the camera 111L, and the right eye image data obtained at the camera 111R to processing treatment to obtain stereoscopic image data (3D image data) in accordance with the transmission format. This video framing unit 112 makes up an image data output unit.

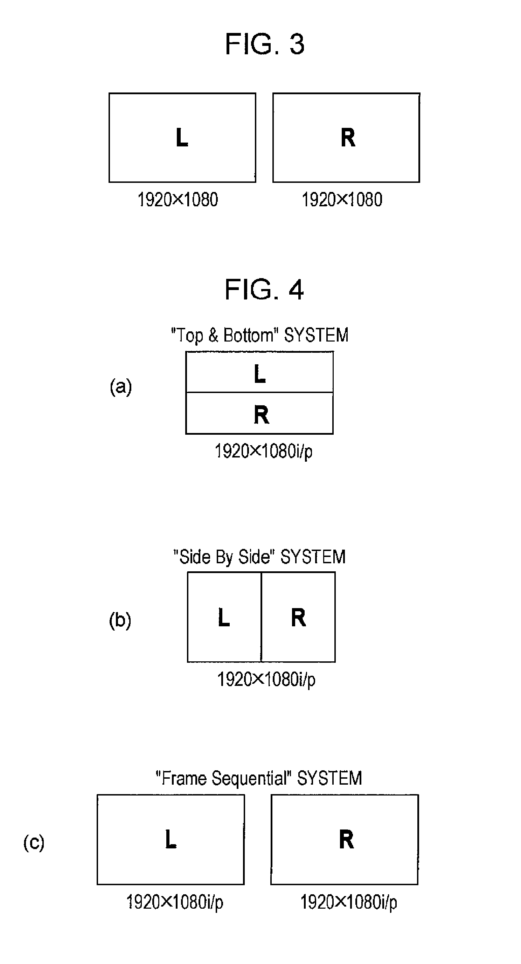

A transmission format example of stereoscopic image data will be described. Here, the following first through third transmission formats will be employed, but another transmission format other than these may be employed. Also, description will be made regarding a case where each of the image data of the left eye (L) and the right eye (R) is image data with a predetermined resolution, e.g., a 1920×1080-pixel format, as shown in Fig. 3, as an example.

The first transmission system is the top and bottom (Top & Bottom) system, and is, as shown in Fig. 4(a), a system wherein with a first-half stage in the vertical direction, the data of each line of left eye image data is transmitted, and with a second-half stage in the vertical direction, the data of each line of left eye image data is transmitted. In this case, the lines of the left eye image data and right eye image data are thinned out to half, and accordingly, vertical resolution is half of the original signal.

The second transmission system is the side by side (Side By Side) system, and is, as shown in Fig. 4(b), a system wherein with a first-half stage in the horizontal direction, the pixel data of left eye image data is transmitted, and with a second-half stage in the horizontal direction, the pixel data of right eye image data is transmitted. In this case, with each of the left eye image data and right eye image data, the pixel data in the horizontal direction is thinned out to half, and accordingly, horizontal resolution is half of the original signal.

The third transmission system is the frame sequential (Frame Sequential) system, and is, as shown in Fig. 4(c), a system wherein left eye image data and right eye image data are transmitted by being sequentially switched for each frame. Note that this Frame Sequential system may be referred to as the full frame (Full Frame) system or backward compatible (Backward Compatible) system.

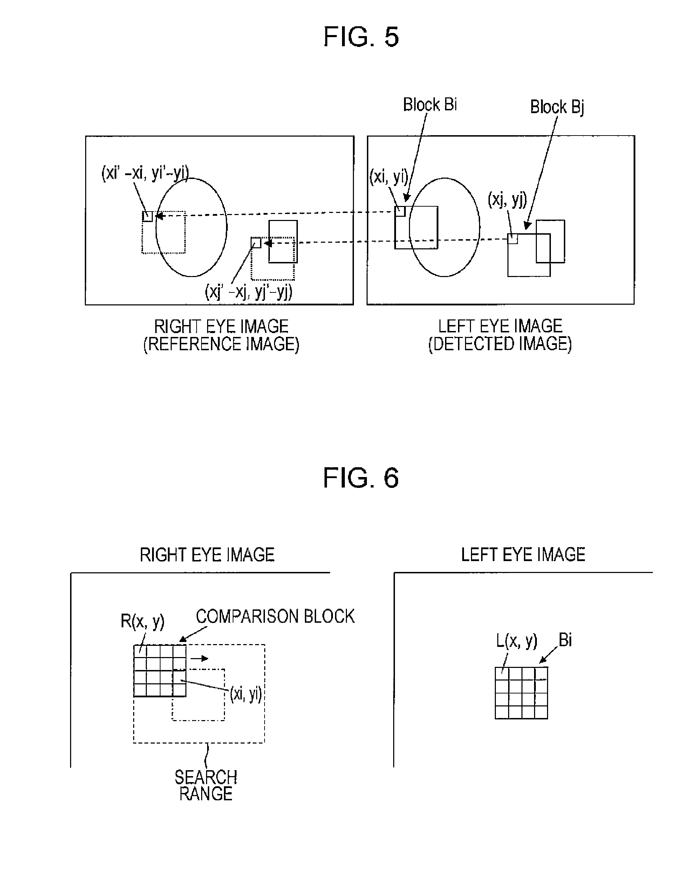

The disparity vector detecting unit 113 detects, based on left eye image data and right eye image data, the disparity vector for each pixel (pixel) making up an image, for example. A detection example of a disparity vector will be described. Here, an example for detecting the disparity vector of a right eye image corresponding to a left eye image will be described. As shown in Fig. 5, a left eye image will be taken as a detected image, and a right eye image will be taken as a reference image. With this example, disparity vectors in the positions of (xi, yi) and (xj, yj) will be detected.

Description will be made regarding a case where the disparity vector in the position of (xi, yi) is detected, as an example. In this case, for example, 4 × 4, 8 × 8, or 16 × 16 pixel block (disparity detection block) Bi with the pixel in the position of (xi, yi) as upper left is set to the left eye image. With a right eye image, a pixel block that matches the pixel block Bi will be searched.

In this case, a search range with the position of (xi, yi) as the center is set to the right eye image, and in the same way as the above pixel block Bi, e.g., a comparative block of 4 × 4, 8 × 8, or 16 × 16 is sequentially set with each pixel within the search range thereof being sequentially taken as a pixel of interest.

Summation of difference absolute values for each corresponding pixel is obtained between the pixel block Bi and a comparative block that is sequentially set. Here, as shown in Fig. 6, if we say that the pixel value of the pixel block Bi is L(x, y), and the pixel value of a comparative block is R(x, y), the summation of difference absolute values between the pixel block Bi and a certain comparative block is represented by Σ|L(x, y) - R(x, y)|.

When n pixels are included in a search range set to the right eye image, finally n summations S1 through Sn are obtained, and the least summation Smin is selected out thereof. The position of the upper left pixel (xi', yi') is obtained from the comparative block from which this summation Smin has been obtained. Thus, the disparity vector in the position of (xi, yi) is detected as with (xi'-xi, yi'-yi). Though detailed description will be omitted, with regard to the disparity vector in the position of (xj, yj) as well, for example, the pixel block Bj of 4 × 4, 8 × 8, or 16 × 16 with the pixel in the position of (xj, yj) as the upper left is set to the left eye image, and the disparity vector is detected in the same processing process.

Description will return to Fig. 2. The microphone 114 detects audio corresponding to an image taken at the cameras 111L and 111R to obtain audio data.

The data extracting unit 115 is used in a state in which a data recording medium 115a is detachably mounted. Examples of this data recording medium 115a include a discshaped recording medium and semiconductor memory. Audio data, the data of superimposed information, and the disparity vector are recorded in this data recording medium 115a in a correlated manner along with stereoscopic image data including left eye image data and right eye image data. The data extracting unit 115 extracts and outputs the stereoscopic image data, audio data, and disparity vector from the data recording medium 115a. This data extracting unit 115 makes up the image data output unit.

Here, the stereoscopic image data recorded in the data recording medium 115a is equivalent to the stereoscopic image data obtained at the video framing unit 112. Also, the audio data recorded in the data recording medium 115a is equivalent to the audio data obtained at the microphone 114. Also, the disparity vector recorded in the data recording medium 115a is equivalent to the disparity vector detected at the disparity vector detecting unit 113.

The switchover switch 116 selectively extracts the stereoscopic image data obtained at the video framing unit 112, or the stereoscopic image data output from the data extracting unit 115. In this case, the switchover switch 116 is, in a live mode, connected to side a to extract the stereoscopic image data obtained at the video framing unit 112, and in a playback mode, connected to side b to extract the stereoscopic image data output from the data extracting unit 115.

The switchover switch 117 selectively extracts the disparity vector detected at the disparity vector detecting unit 113, or the disparity vector output from the data extracting unit 115. In this case, the switchover switch 117 is, in the live mode, connected to side a to extract the disparity vector detected at the disparity vector detecting unit 113, and in the playback mode, connected to side b to extract the disparity vector output from the data extracting unit 115.

The switchover switch 118 selectively extracts the audio data obtained at the microphone 114, or the audio data output from the data extracting unit 115. In this case, the switchover switch 118 is, in the live mode, connected to side a to extract the audio data obtained at the microphone 114, and in the playback mode, connected to side b to extract the audio data output from the data extracting unit 115.

The video encoder 119 subjects the stereoscopic image data extracted at the switchover switch 116 to encoding such as MPEG4-AVC, MPEG2, VC-1, or the like to generate a video data stream (video elementary stream). The audio encoder 120 subjects the audio data extracted at the switchover switch 118 to encoding such as AC3, AAC, or the like to generate an audio data stream (audio elementary stream).

The subtitle generating unit 121 generates caption data that is the subtitle data of DVB (Digital Video Broadcasting). This subtitle data is two-dimensional image subtitle data. This subtitle generating unit 121 makes up a superimposed information data output unit.

The disparity information creating unit 122 subjects the disparity vector (disparity vector in the horizontal direction) for each pixel (pixel) extracted at the switchover switch 117 to downsizing processing to create disparity information (disparity vector in the horizontal direction) to be applied to a subtitle. This disparity information creating unit 122 makes up a disparity information output unit. Note that disparity information to be applied to a subtitle may be applied in increments of pages, in increments of regions, or in increments of objects. Also, this disparity information does not necessarily have to be generated at the disparity information creating unit 122, and may be arranged to externally be supplied.

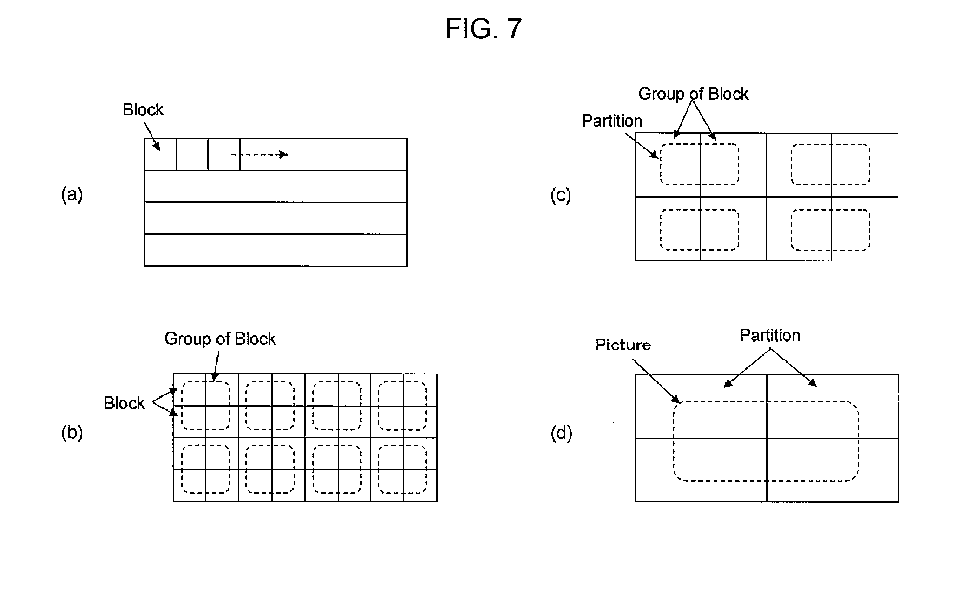

Fig. 7 illustrates an example of downsizing processing that is performed at the disparity information creating unit 122. First, the disparity information creating unit 122 obtains, as shown in Fig. 7(a), a disparity vector for each block using the disparity vector for each pixel (pixel). As described above, the blocks are equivalent to the upper layer of a pixel (pixel) positioned in the lowest layer, and are configured by an image (picture) area being divided with predetermined sizes in the horizontal direction and the vertical direction. The disparity vector of each block is obtained by a disparity vector having the largest value being selected from the disparity vectors of all the pixels (pixels) included in the block thereof.

Next, the disparity information creating unit 122 obtains, as shown in Fig. 7(b), the disparity vector for each group (Group Of Block) using the disparity vector for each block. The groups are equivalent to the upper layer of blocks, and are obtained by collectively grouping multiple adjacent blocks. With the example in Fig. 7(b), each group is configured of four blocks bundled with a dashed-line frame. The disparity vector of each group is obtained by a disparity vector having the largest value being selected from the disparity vectors of all the blocks within the group thereof, for example.

Next, the disparity vector information creating unit 122 obtains, as shown in Fig. 7(c), the disparity vector for each partition (Partition) using the disparity vector for each group. The partitions are equivalent to the upper layer of groups, and are obtained by collectively grouping multiple adjacent groups. With the example in Fig. 7(c), each partition is configured of two groups bundled with a dashed-line frame. The disparity vector of each partition is obtained by a disparity vector having the largest value being selected from the disparity vectors of all the groups within the partition thereof, for example.

Next, the disparity information creating unit 122 obtains the disparity vector of the entire picture (entire image) positioned in the uppermost layer using the disparity vector for each partition, as shown in Fig. 7(d). With the example in Fig. 7(d), four partitions bundled with a dashed-line frame are included in the entire picture. The disparity vector of the entire picture is obtained by a disparity vector having the largest value being selected from the disparity vectors of all the partitions included in the entire picture, for example.

In this way, the disparity information creating unit 122 subjects the disparity vector for each pixel (pixel) positioned in the lowest layer to downsizing processing, whereby the disparity vector of each area of each hierarchical level of the blocks, groups, partitions, and the entire picture can be obtained. Note that, with an example of the downsizing processing shown in Fig. 7, in addition to the hierarchical level of pixels (pixels), the disparity vectors of the four hierarchical levels of blocks, groups, partitions, and the entire picture are finally obtained. However, the number of hierarchical levels, how to section the areas of each hierarchical level, and the number of areas are not restricted to these.

Description will return to Fig. 2. The subtitle processing unit 123 converts the subtitle data generated at the subtitle generating unit 121 into stereoscopic image (three-dimensional image) subtitle data conforming to the transmission format of the stereoscopic image data to be extracted at the switchover switch 116. This subtitle processing unit 123 makes up a superimposed information data processing unit, and the stereoscopic image data subtitle data after conversion makes up superimposed information data for transmission.

This stereoscopic image subtitle data has the data of a left eye subtitle, and the data of a right eye subtitle. Here, the data of a left eye subtitle is data corresponding to left eye image data included in the above stereoscopic image data, and is data for generating the display data of a left eye subtitle to be superimposed on the left eye image data that the stereoscopic image data has on the reception side. Also, the data of a right eye subtitle is data corresponding to right eye image data included in the above stereoscopic image data, and is data for generating the display data of a right eye subtitle to be superimposed on the right eye image data that the stereoscopic image data has on the reception side.

In this case, the subtitle processing unit 123 can provide disparity between the left eye subtitle and right eye subtitle by shifting at least the left eye subtitle or right eye subtitle based on the disparity information (disparity vector in the horizontal direction) to be applied to the subtitle from the disparity information creating unit 122. In this way, disparity is provided between the left eye subtitle and the right eye subtitle, whereby consistency of perspective as to each object within an image can be kept in the optimal state with display of a subtitle (caption) without performing processing for providing disparity on the reception side.

This subtitle processing unit 123 includes a display control information generating unit 124. This display control information generating unit 124 generates display control information relating to a sub region (Subregion). Here, the sub region is an area that is defined only within a region. This sub region includes a left eye sub region (left eye SR) and a right eye sub region (right eye SR). Hereafter, a sub region will be referred to as left eye SR, and a right eye sub region will be referred to as right eye SR, as appropriate.

The left eye sub region is an area set corresponding to the display position of a left eye subtitle within a region that is the display area of superimposed information data for transmission. Also, the right eye sub region is an area set corresponding to the display position of a right eye subtitle within a region that is the display area of superimposed information data for transmission. For example, the left eye sub region makes up the first display area, and the right eye sub region makes up the second display area. The areas of these left eye SR and right eye SR are set, for example, based on the user's operations, or automatically for each subtitle data generated at the subtitle generating unit 121. Note that, in this case, the areas of the left eye SR and right eye SR are set so that the left subtitle within the left eye SR corresponds to the right eye subtitle within the right eye SR.

The area information of the left eye SR, and the area information of the right eye SR are included in the display control information. Also, the information of a target frame for displaying the left eye subtitle included in the left eye SR, and the information of a target frame for displaying the right eye subtitle included in the right eye SR are included in this display control information. Here, the information of a target frame for displaying the left eye subtitle included in the left eye SR indicates the frame of the left eye image, and the information of a target frame for displaying the right eye subtitle included in the right eye SR indicates the frame of the right eye image.

Also, disparity information (disparity) for shift-adjusting the display position of the left eye subtitle included in the left eye SR, and disparity information for shift-adjusting the display position of the right eye subtitle included in the right eye SR are included in this display control information. Such disparity information is for providing disparity between the left eye subtitle included in the left eye SR, and the right eye subtitle included in the right eye SR.

In this case, the display control information generating unit 123 obtains disparity information for shift adjustment included in the above display control information based on the disparity information (disparity vector in the horizontal direction) to be applied to, for example, a subtitle created at the disparity information creating unit 122. Here, the disparity information "Disparity1" of the left eye SR, and the disparity information "Disparity2" of the right eye SP are determined so that the absolute values of these are equal, and moreover, difference of these is a value corresponding to the disparity information (Disparity) to be applied to a subtitle. For example, in the event that the transmission format of stereoscopic image data is the Side By Side system, the value corresponding to the disparity information (Disparity) is "Disparity / 2". Also, for example, in the event that the transmission format of stereoscopic image data is the top and bottom (Top & Bottom) system, the value corresponding to the disparity information (Disparity) is "Disparity".

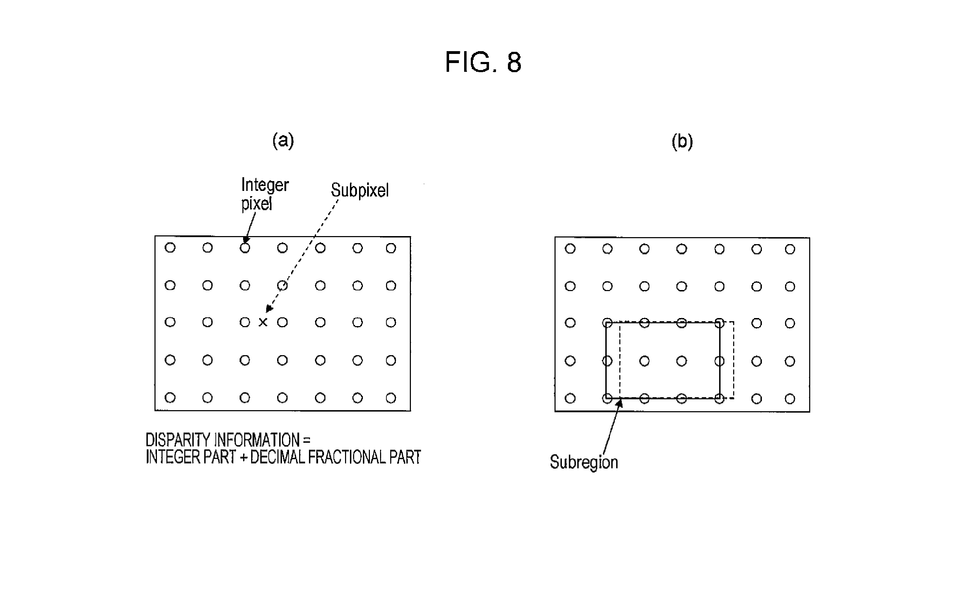

With the present embodiment, the display control information generating unit 124 generates disparity information to be included in the above display control information so as to have sub pixel precision. In this case, the disparity information is, as shown in Fig. 8(a), made up of an integer part and a decimal fractional part. Note that a sub pixel (Subpixel) is obtained by fragmenting a pixel (Integer pixel) making up a digital image. The disparity information has sub pixel precision, whereby the display positions of the left eye subtitle within the left eye SR, and the right eye subtitle within the right eye SR can be shift-adjusted with sub pixel precision on the reception side. Fig. 8(b) schematically illustrates a shift adjustment example with sub pixel precision, and illustrates an example wherein the display position of a subtitle within a region and a partition is shift-adjusted from a solid-line frame position to a dashed-line frame position.

Note that subtitle data has segments such as DDS, PCS, RSC, CDS, ODS, and so forth. DDS (display definition segment) specifies a display (display) size for HDTV. PCS (page composition segment) specifies a region (region) position within a page (page). RCS (region composition segment) specifies the size of a region (Region), or the encoding mode of an object (object), and also specifies the start position of an object (object). CDS (CLUT definition segment) specifies CLUT contents. ODS (objectdata segment) includes encoded pixel data (Pixeldata).

With the present embodiment, an SCS (Subregion composition segment) segment is newly defined. The display control information generated at the display control information generating unit 124 is inserted into this SCS segment as described above. The details of the processing of the subtitle processing unit 123 will further be described later.

Description will return to Fig. 2. The subtitle encoder 125 generates a subtitle data stream (subtitle elementary stream) including stereoscopic image subtitle data output from the subtitle processing unit 123, and display control information. The multiplexer 126 multiplexes the data streams from the video encoder 119, audio encoder 120, and subtitle encoder 125 to obtain a multiplexed data stream serving as bit stream data (transport stream) BSD.

Note that, with the present embodiment, the multiplexer 126 inserts identification information for identifying that stereoscopic image subtitle data is included, into the subtitle data stream. Specifically, Stream_content ('0x03' = DVBsubtitles) & Component_type (for 3D target) are described in a component descriptor inserted under EIT (Event Information Table). Component_type (for 3D target) is newly defined for indicating stereoscopic image subtitle data.

The operation of the transmission data generating unit 110 shown in Fig. 2 will briefly be described. At the camera 111L, a left eye image is taken. Left eye image data for display of a stereoscopic image obtained at this camera 111L is supplied to the video framing unit 112. Also, at the camera 111R, a right eye image is taken. Right eye image data for display of a stereoscopic image obtained at this camera 111R is supplied to the video framing unit 112. At the video framing unit 112, the left eye image data and right eye image data are subjected to processing treatment according to the transmission format, and stereoscopic image data is obtained (see Fig. 4(a) through (c)).

The stereoscopic image data obtained at the video framing unit 112 is supplied to a fixed terminal on the side a of the switchover switch 116. Also, the stereoscopic image data obtained at the data extracting unit 115 is supplied to a fixed terminal on the side b of the switchover switch 116. In the live mode, the switchover switch 116 is connected to the side a, and the stereoscopic image data obtained at the video framing unit 112 is extracted from this switchover switch 116. In the playback mode, the switchover switch 116 is connected to the side b, and the stereoscopic image data output from the data extracting unit 115 is extracted from this switchover switch 116.

The stereoscopic image data extracted at the switchover switch 116 is supplied to the video encoder 119. At this video encoder 119, the stereoscopic image data thereof is subjected to encoding such as MPEG4-AVC, MPEG2, VC-1, or the like, and a video data stream including encoded video data is generated. This video data stream is supplied to the multiplexer 126.

The audio data obtained at the microphone 114 is supplied to a fixed terminal on the side a of the switchover switch 118. Also, the audio data obtained at the data extracting unit 115 is supplied to a fixed terminal on the side b of the switchover switch 118. In the live mode, the switchover switch 118 is connected to the side a, and the audio data obtained at the microphone 114 is extracted from this switchover switch 118. In the playback mode, the switchover switch 118 is connected to the side b, and the audio data output from the data extracting unit 115 is extracted from this switchover switch 118.

The audio data extracted at the switchover switch 118 is supplied to the audio encoder 120. At this audio encoder 120, the audio data is subjected to encoding such as MPEG-2 Audio AAC, MPEG-4 AAC, or the like, and an audio data stream including encoded audio data is generated. This audio data stream is supplied to the multiplexer 126.

The left eye image data and right eye image data obtained at the cameras 111L and 111R are supplied to the disparity vector detecting unit 113 through the video framing unit 112. At this disparity vector detecting unit 113, based on the left eye image data and right eye image data, the disparity vector for each pixel (pixel) is detected. This disparity vector is supplied to a fixed terminal on the side a of the switchover switch 117. Also, the disparity vector for each pixel (pixel) output from the data extracting unit 115 is supplied to a fixed terminal on the side b of the switchover switch 117.

In the live mode, the switchover switch 117 is connected to the side a, and the disparity vector for each pixel (pixel) obtained at the disparity vector detecting unit 113 is extracted from this switchover switch 117. In the playback mode, the switchover switch 117 is connected to the side b, and the disparity vector for each pixel (pixel) output from the data extracting unit 115 is extracted from this switchover switch 117.

At the subtitle generating unit 121, caption data (for a two-dimensional image) that is the subtitle data of DVB is generated. This subtitle data is supplied to the disparity information creating unit 122 and subtitle processing unit 123.

The disparity vector for each pixel (pixel) extracted at the switchover switch 117 is supplied to the disparity information creating unit 122. At this disparity information creating unit 122, the disparity vector for each pixel is subjected to downsizing processing, and disparity information (disparity vector in the horizontal direction = Disparity) to be applied to a subtitle is created. This disparity information is supplied to the subtitle processing unit 123.

At the subtitle processing unit 123, the two-dimensional image subtitle data generated at the subtitle generating unit 121 is converted into stereoscopic image subtitle data conforming to the transmission format of the stereoscopic image data extracted at the above switchover switch 116. This stereoscopic image subtitle data has the data of a left eye subtitle, and the data of a right eye subtitle. In this case, at the subtitle processing unit 123, based on the disparity information to be applied to the subtitle from the disparity information creating unit 122, disparity may be provided between the left eye subtitle and right eye subtitle by shifting at least the left eye subtitle or right eye subtitle.

At the display control information generating unit 124 of the subtitle processing unit 123, display control information (area information, target frame information, disparity information) relating to a sub region (Subregion) is generated. As described above, a left eye sub region (left eye SR) and a right eye sub region (right eye SR) are included in a sub region. Therefore, the area information, target frame information, and disparity information of each of the left eye SR and right eye SR are generated as display control information.

As described above, the left eye SR is set to the inside of a region that is the display area of superimposed information data for transmission, corresponding to the display position of the left eye subtitle, for example, based on the user's operations or automatically. Similarly, the right eye SR is set to the inside of a region that is the display area of superimposed information data for transmission, corresponding to the display position of the right eye subtitle, for example, based on the user's operations or automatically.

The stereoscopic image subtitle data, and display control information obtained at the subtitle processing unit 123 are supplied to the subtitle encoder 125. At this subtitle encoder 125, a subtitle data stream including the stereoscopic image subtitle data, and display control information is generated. Segments such as DDS, PCS, RCS, CDS, ODS, and so forth, into which stereoscopic image subtitle data is inserted, and also a newly defined SCS segment including display control information are included in this subtitle data stream.

As described above, the data streams from the video encoder 119, audio encoder 120, and subtitle encoder 125 are supplied to the multiplexer 126. At the multiplexer 126, the data streams are packetized and multiplexed, and a multiplexed data stream serving as bit stream data (transport stream) BSD is obtained.

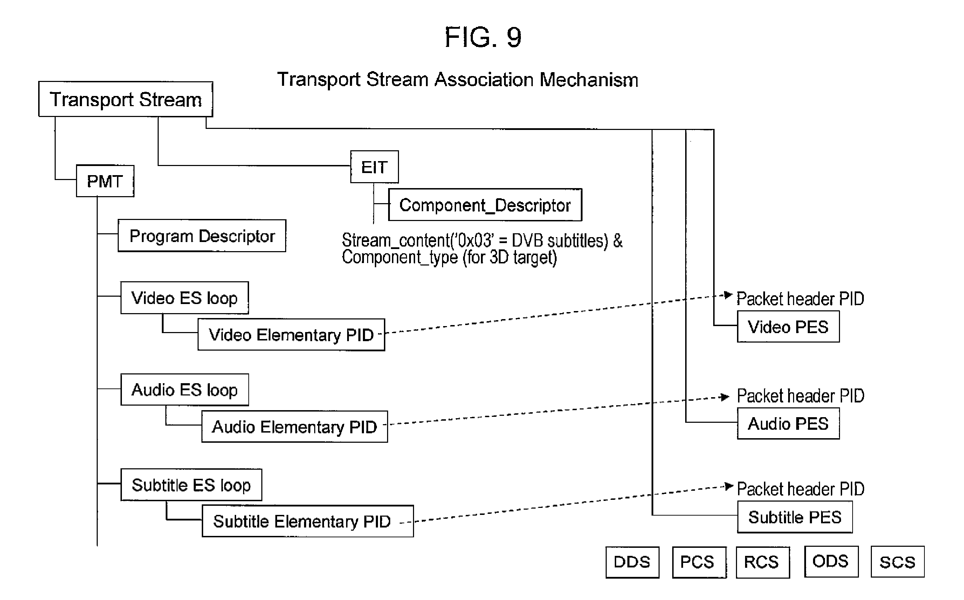

Fig. 9 illustrates a structure example of a transport stream (bit stream data). PES packets obtained by packetizing the elementary streams are included in this transport stream. With this structure example, a PES packet "Video PES" of a video elementary stream, a PES packet "AudioPES" of an audio elementary stream, and a PES packet "Subtitle PES" of a subtitle elementary stream are included.

With the present embodiment, stereoscopic image subtitle data and display control information are included in a subtitle elementary stream (subtitle data stream). Conventionally known segments such as DDS, PCS, RCS, CDS, ODS, and so forth, and also a newly defined SCS segment including display control information are included in this stream.

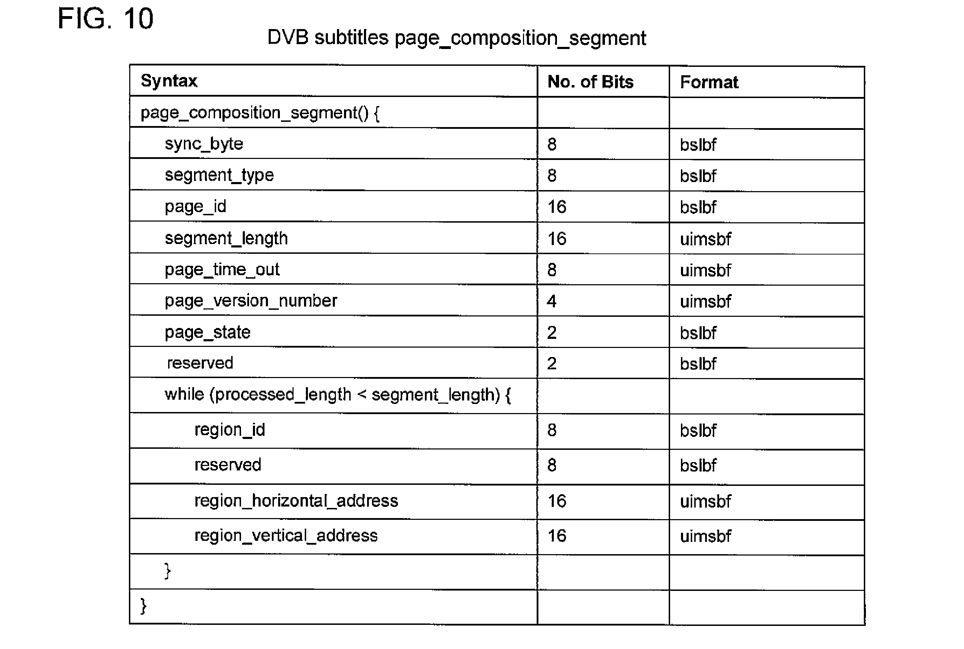

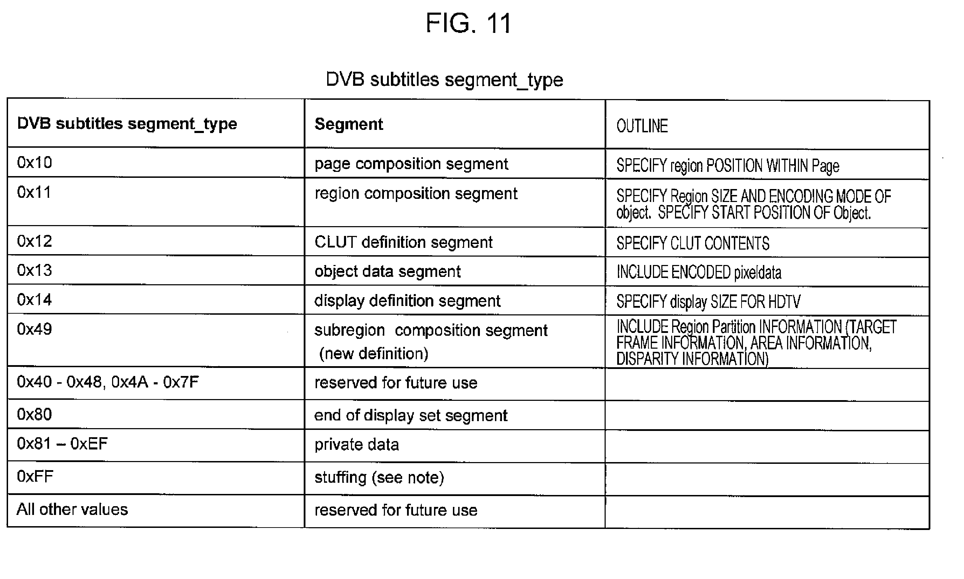

Fig. 10 illustrates the structure of a PCS (page_composition_segment). The segment type of this PCS is, as shown in Fig. 11, "0x10". "region_horizontal_address" and "region_vertical_address" indicate the start position of a region (region). Note that, with regard to other segments such as DDS, RSC, ODS, and so forth, the drawing of the structures thereof will be omitted. As shown in Fig. 11, the segment type of DDS is "0x14", the segment type of RCS is "0x11", the segment type of CDS is "0x12", and the segment type of ODS is "0x13". For example, as shown in Fig. 11, the segment type of SCS is "0x49". The detailed structure of this SCS segment will be described later.

Description will return to Fig. 9. Also, a PMT (Program Map Table) is included in the transport stream as PSI (Program Specific Information). This PSI is information where which program each elementary stream included in the transport stream belongs to is described. Also, an EIT (EventInformation Table) serving as SI (Serviced Information) for performing management in increments of events is included in the transport stream. Meta data in increments of programs is recorded in this EIT.

There is a program descriptor (ProgramDescriptor) where information relating to the entire program is described in the PMT. Also, there is an elementary loop having information relating to each elementary stream in this PMT. With this structure example, there are a video elementary loop, an audio elementary loop, and a subtitle elementary loop. Information such as a packet identifier (PID) and so forth is disposed in each elementary loop for each stream, and also though not shown in the drawing, a descriptor (descriptor) where information relating to the elementary stream thereof is described is also disposed.

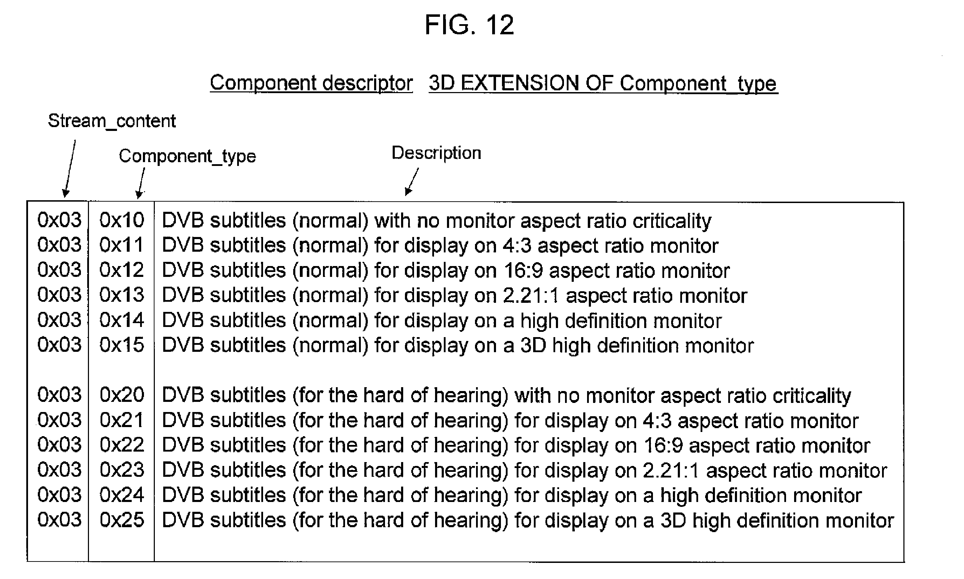

A component descriptor (Component_Descriptor) is inserted under the EIT. With the present embodiment, Stream_content('0x03' = DVB subtitles) & Component_type (for 3D target) are described in this component descriptor. Thus, it can be identified that stereoscopic image subtitle data is included in a subtitle data stream. With the present embodiment, as shown in Fig. 12, in the event that "stream_content" of "component_descriptor" indicating the contents of distribution indicates a subtitle (subtitle), information indicating the format of a 3D subtitle (Component_type = 0x15, 0x25) will be newly defined.

### Processing of Subtitle Processing Unit

The details of the processing of the subtitle processing unit 123 of the transmission data generating unit 110 shown in Fig. 2 will be described. This subtitle processing unit 123 converts, as described above, two-dimensional image subtitle data into stereoscopic image subtitle data. Also, this subtitle processing unit 123 generates, as described above, display control information (including area information of left eye SR and right eye SR, target frame information, disparity information) at the display control information generating unit 124.

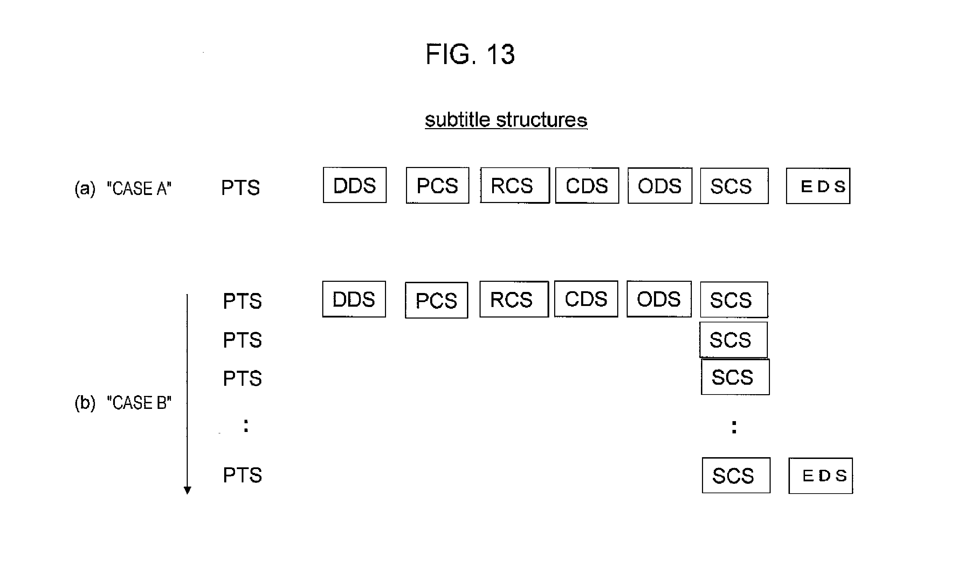

For example, "case A" or "case B" can be conceived as the structure of subtitle data (including display control information) created and transmitted at the subtitle processing unit 123, as shown in Fig. 13. With the structure of "case A", before start of a predetermined number of frame periods when a subtitle is displayed, a series of segments relating to subtitle display of DDS, PCS, RCS, CDS, ODS, SCS, and EDS are created, to which time information (PTS) is added, and are transmitted in bulk. Note that a predetermined number of frame periods when a subtitle is displayed will hereafter be referred to as "subtitle display period" as appropriate.

With the structure of "case B", before start of a predetermined number of frame periods (subtitle display periods) when a subtitle is displayed, a series of segments relating to subtitle display of DDS, PCS, RCS, CDS, ODS, and SCS, are created, to which time information (PTS) is added, and are transmitted in bulk. Then, during a subtitle display period, an SCS segment where the disparity information has been updated is sequentially created, to which time information (PTS) is added, and transmitted. At the time of transmitting the final SCS segment, an EDS segment is also created, to which time information (PTS) is added, and transmitted.

With the structure of this "case B", an SCS segment of which the disparity information is sequentially updated is transmitted during a subtitle display period, whereby the display positions of the left eye subtitle within the left eye SR, and the right eye subtitle within the right eye SR can dynamically be controlled. Thus, the reception side can dynamically change disparity to be applied between the left eye subtitle and the right eye subtitle in sync with change in image contents.

Note that, with the structure of the above "case B", in the event of a method for dynamically controlling the display positions of the left eye subtitle within the left eye SR, and the right eye subtitle within the right eye SR, the following display on/off control is needed on the reception side. Specifically, this display on/off control is control wherein at the time of performing display based on the disparity information within the SCS segment of a certain frame, this display is turned on (valid), and also display based on the disparity information within the SCS segment of the previous frame is turned off (invalid).

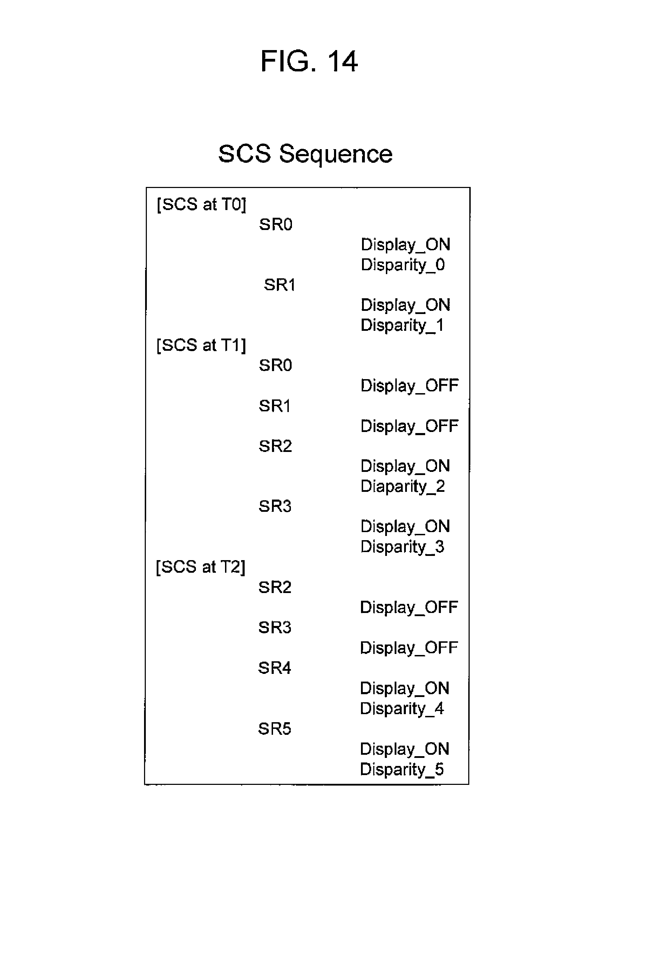

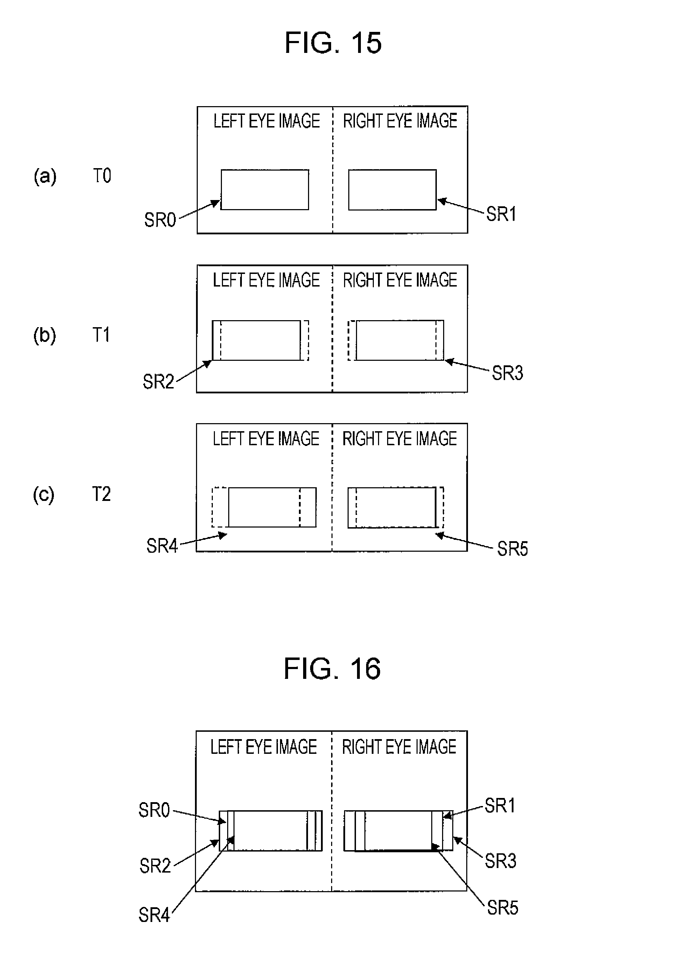

In order to perform display on/off control on the reception side, command information for controlling on/off of display (Display) is included in the SCS segment, though details will be described later. An example of display on/off control on the reception side will be described with reference to Fig. 14 and Fig. 15.

Fig. 14 illustrates an example of an SCS segment to be sequentially transmitted to the reception side. With this example, an SCS corresponding to each frame of T0 frame, T1 frame, and T2 frame is sequentially transmitted. Fig. 15 illustrates a shift example of the display positions of the left eye subtitle within the left eye SR, and the right eye subtitle within the right eye SR according to an SCS corresponding to each frame of T0 frame, T1 frame, and T2 frame.

As shown in Fig. 14, disparity information (Diparity_0) for obtaining the display position SP0 of the left eye subtitle within the left eye SR, and command information (Display_ON) for turning on (valid) display of this display position SR0 are included in the SCS of the T0 frame. Also, disparity information (Diparity_1) for obtaining the display position SR1 of the right eye subtitle within the right eye SR, and command information (Display_ON) for turning on (valid) display of this display position SR1 are included in the SCS of the T0 frame.

Therefore, with this T0 frame, as shown in Fig. 15(a) using a solid-line frame, a state is provided wherein the left eye subtitle within the left eye SR is displayed (superimposed) on the display position SR0 on the left eye image. Also, with this T0 frame, as shown in Fig. 15(a) using a solid-line frame, a state is provided wherein the right eye subtitle within the right eye SR is displayed (superimposed) in the display position SR1 on the right eye image.

Also, as shown in Fig. 14, command information (Display_OFF) for turning off (invalid) display of the display positions SR0 and SR1 is included in the SCS of the T1 frame. Also, disparity information (Diparity_2) for obtaining the display position SR2 of a subtitle within the left eye SR, and command information (Display_ON) for turning on (valid) display of this display position SR2 are included in the SCS of the T1 frame. Also, disparity information (Diparity_3) for obtaining the display position SR3 of the right eye subtitle within the right eye SR, and command information (Display_ON) for turning on (valid) the display of this display position SR3 are included in the SCS of the T1 frame.

Therefore, with this T1 frame, as shown in Fig. 15(b) using a dashed-line frame, display of the display position SR0 on the left eye image is turned off (invalid), and also display of the display position SR1 on the right eye image is turned off (invalid). With this T1 frame, as shown in Fig. 15(b) using a solid-line frame, a state is provided wherein the left eye subtitle within the left eye SR is displayed (superimposed) on the display position SR2 on the left eye image. Also, with this T1 frame, as shown in Fig. 15(b) using a solid-line frame, a state is provided wherein the right eye subtitle within the right eye SR is displayed (superimposed) on the display position SR3 on the right eye image.

Also, as shown in Fig. 14, command information (Display_OFF) for turning off (invalid) display of the display positions SR2 and SR3 is included in the SCS of the T2 frame. Also, disparity information (Diparity_4) for obtaining the display position SR4 of a subtitle within the left eye SR, and command information (Display_ON) for turning on (valid) display of this display position SR4 are included in the SCS of the T2 frame. Also, disparity information (Diparity_5) for obtaining the display position SR5 of the right eye subtitle within the right eye SR, and command information (Display_ON) for turning on (valid) the display of this display position SR5 are included in the SCS of the T2 frame.

Therefore, with this T2 frame, as shown in Fig. 15(c) using a dashed-line frame, display of the display position SR2 on the left eye image is turned off (invalid), and also display of the display position SR3 on the right eye image is turned off (invalid). With this T2 frame, as shown in Fig. 15(c) using a solid-line frame, a state is provided wherein the left eye subtitle within the left eye SR is displayed (superimposed) on the display position SR4 on the left eye image. Also, with this T2 frame, as shown in Fig. 15(c) using a solid-line frame, a state is provided wherein the right eye subtitle within the right eye SR is displayed (superimposed) on the display position SP5 on the right eye image.

Fig. 16 illustrates, for example, a display example of the left eye subtitle and right eye subtitle on the reception side in the event that no command information for controlling on/off of display (Display) is included in the SCS segment. In this case, a subtitle within the left eye SR is in a state displayed (superimposed) on the display positions SR0, SR2, and SR4 in a superimposed manner. Also, a subtitle within the right eye SR is in a state displayed (superimposed) on the display positions SR1, SR3, and SR5 in a superimposed manner. In this way, the left eye subtitle within the left eye SR, and the right eye subtitle within the right eye SR are in a state in which dynamic change in the display positions is not correctly performed.

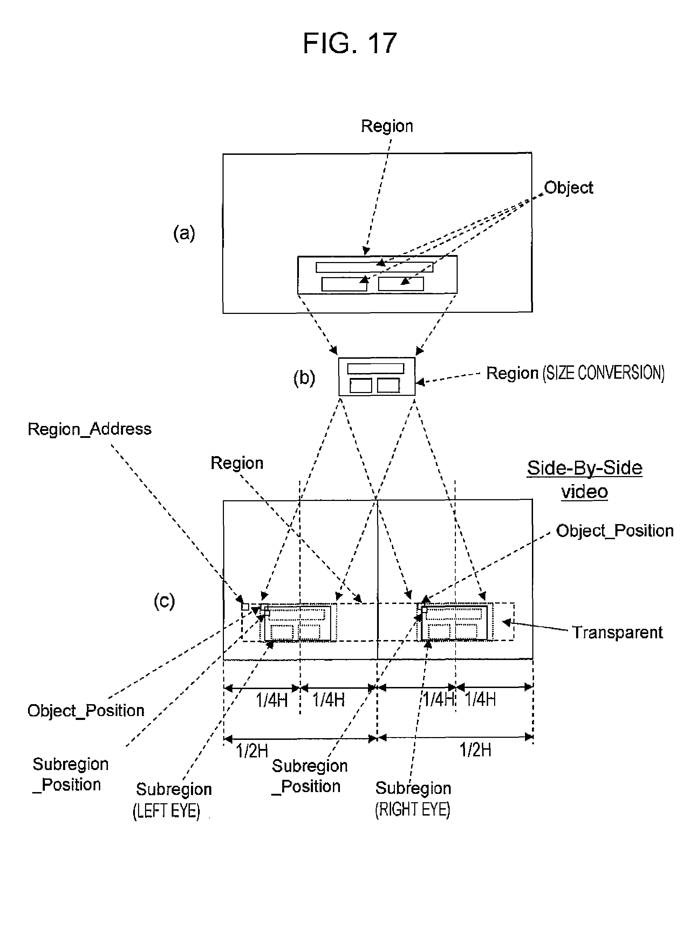

Fig. 17 conceptually illustrates a creating method of stereoscopic image subtitle data in the case that the transmission format of stereoscopic image data is the Side By Side system. Fig. 17(a) illustrates a region (region) according to two-dimensional image subtitle data. Note that, with this example, three objects (object) are included in the region.

First, the subtitle processing unit 123 converts the size of the above region (region) according to two-dimensional image subtitle data into a size adapted to the Side By Side system as shown in Fig. 17(b), and generates bitmap data of the size thereof.

Next, the subtitle processing unit 123 takes, as shown in Fig. 17(c), the bitmap data after size conversion as a component of the region (region) in the stereoscopic image subtitle data, i.e., takes the bitmap data after size conversion as the object corresponding to the left eye subtitle within the region, and also takes as the object corresponding to the right eye subtitle within the region.

The subtitle processing unit 123 converts, as described above, the two-dimensional image subtitle data into stereoscopic image subtitle data, and creates segments such as DDS, PCS, RCS, CDS, ODS, and so forth corresponding to this stereoscopic image subtitle data.

Next, the subtitle processing unit 123 sets the left eye SR and right eye SR on the area of the region (region) in the stereoscopic image subtitle data based on the user's operations or automatically, as shown in Fig. 17(c). The left eye SR is set to an area including the object corresponding to the left eye subtitle. The right eye SR is set to an area including the object corresponding to the right eye subtitle.

The subtitle processing unit 123 creates an SCS segment including the area information, target frame information, and disparity information of the left eye SR and right eye SR, set as described above. For example, the subtitle processing unit 123 creates an SCS including in common the area information, target frame information, and disparity information of the left eye SR and right eye SR, or creates SCS segments including the area information, target frame information, and disparity information of the left eye SR and right eye SR, respectively.

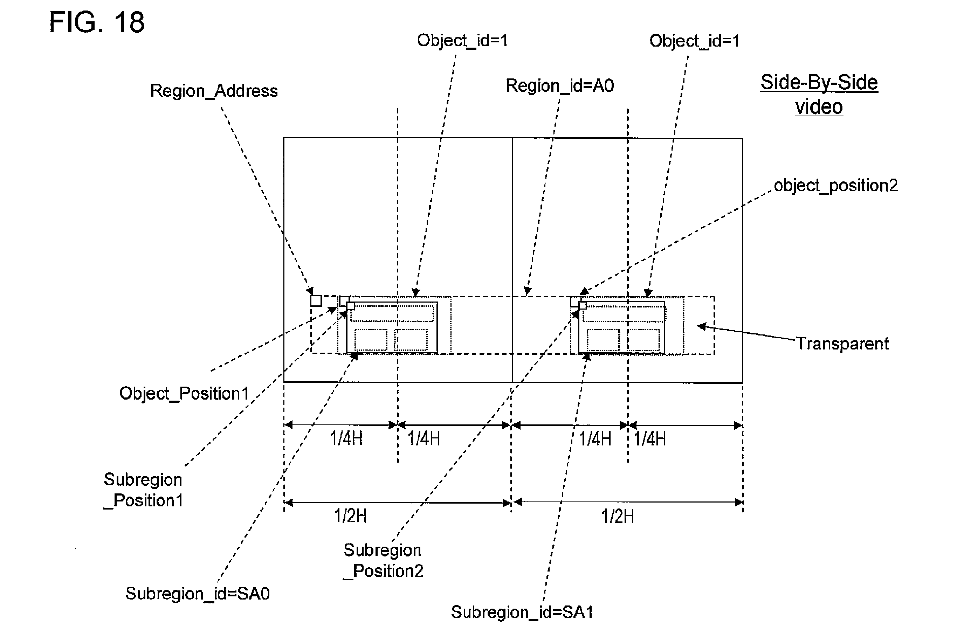

Fig. 18 illustrates an example of a region (region) and an object (object) according to stereoscopic image subtitle data created as described above. Here, the start position of the region is "Region_address". The object on the left eye image (left view) side has "Object_Position1" as the start position, and has "Object_id = 1". Also, the object on the right eye image (Right view) side has "Object_Position2" as the start position, and has "Object_id = 1".

Also, Fig. 18 illustrates an example of the left eye SR and right eye SR set as described above. The left eye SR has "Subregion_position1" as the start position, and has "Subregion_id = SA0". The right eye RP has "Subregion_position2" as the start position, and has "Subregion_id = SA1".

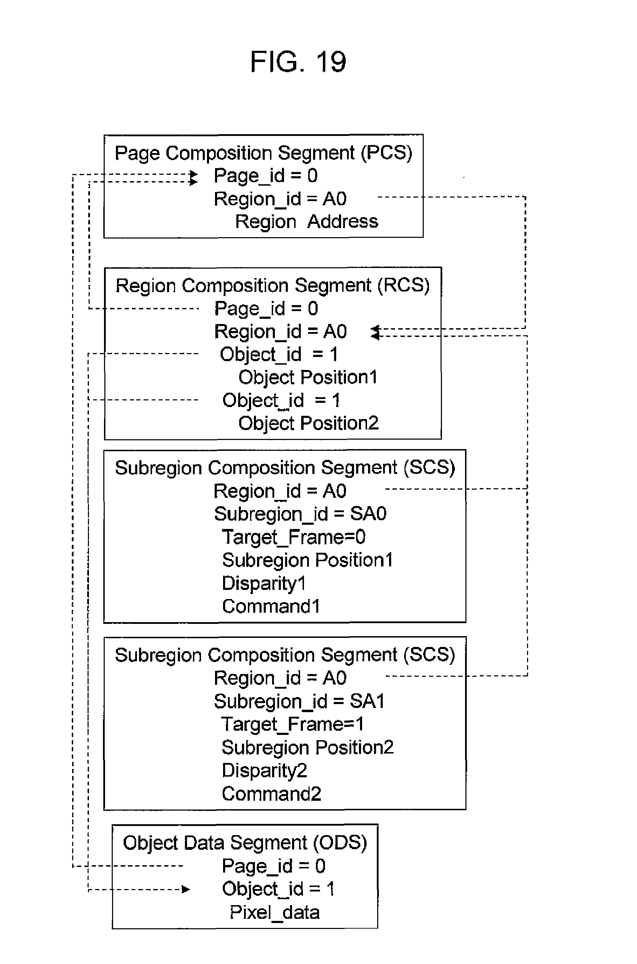

Fig. 19 illustrates a creation example (example 1) of each segment of stereoscopic image subtitle data in the case that the transmission format of stereoscopic image data is the Side By Side system. With this creation example, with a PCS (page composition segment), the start position (region_address) of a region (Region_id = 0A) is specified. Also, with a RCS (region composition segment) of "Region_id = 0", an ODS of "Object_id = 1" is referenced. With this RCS, the start position "object_position1" of the object on the left eye image side, and the start position "object_position2" of the object on the right eye image side are specified.

Also, with this creation example, the SCSes (Subregioncomposition segment) of the left eye SR and right eye SR are separately created. With the SCS of the left eye SR of "Subregion_id = SA0", the start position (Subregion Position1) of the left eye SR is specified. The target frame information (Target_Frame = 0) of the left eye SR, the disparity information (Disparity1) of the left eye SR, and the command information (Command1) of display on/off are included in this SCS of the left eye SR.

Also, with the SCS of the right eye SR of "Subregion_id = SA1", the start position (Subregion Position2) of the right eye SR is specified. The target frame information (Target_Frame = 1) of the right eye SR, the disparity information (Disparity2) of the right eye SR, and the command information (Command2) of display on/off are included in this SCS of the right eye SR.

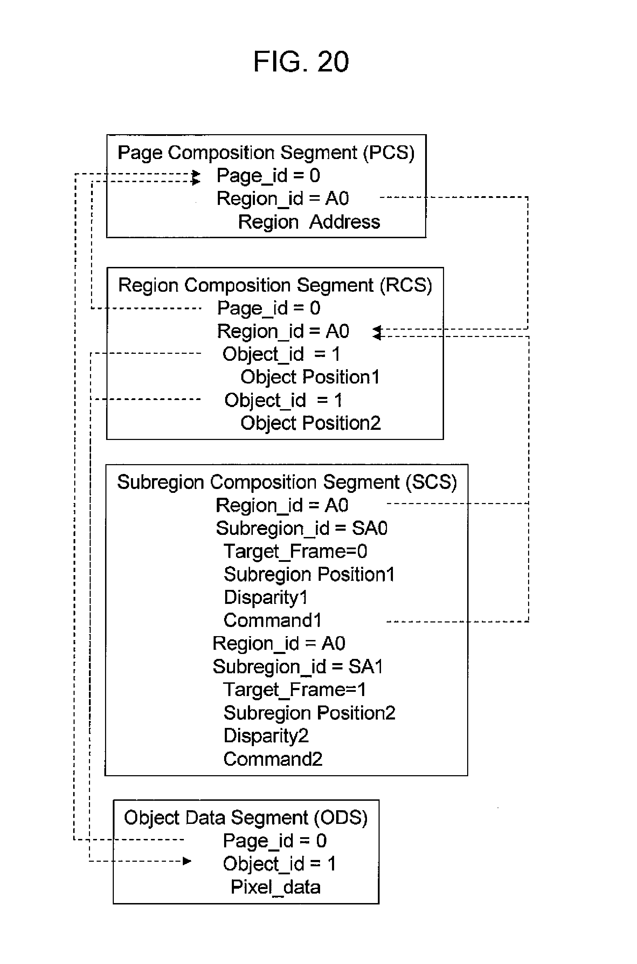

Fig. 20 illustrates another creation example (example 2) of each segment of stereoscopic image subtitle data in the case that the transmission format of stereoscopic image data is the Side By Side system. With this creation example, in the same way as the creation example (example 1) shown in Fig. 19, segments of PCS, RCS, and ODS are created. Also, with this creation example, the SCSes of the left eye SR and right eye SR are created in common. That is to say, various types of information of the left eye SR and right eye SR are included in the common SCS.

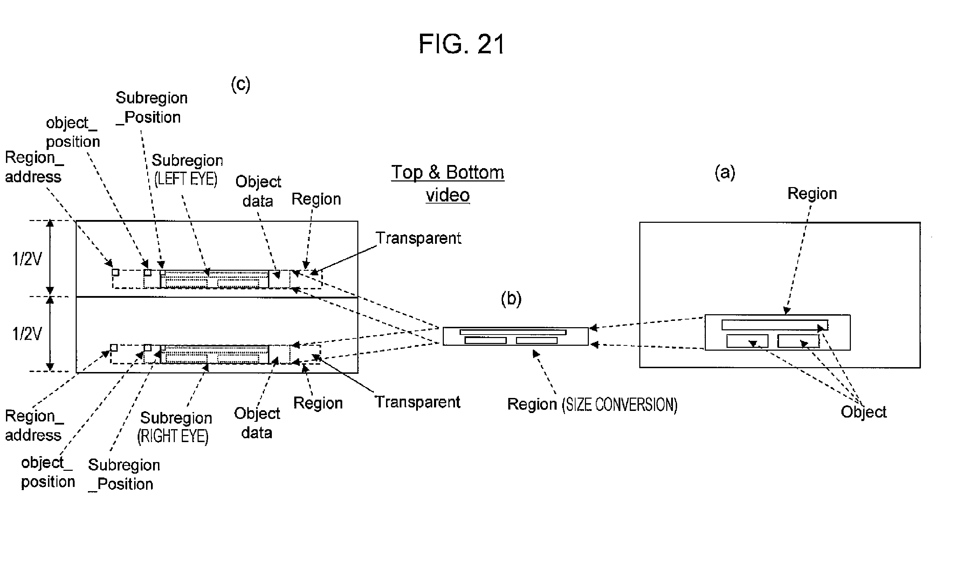

Fig. 21 conceptually illustrates a creation method of stereoscopic image subtitle data in the case that the transmission format of stereoscopic image data is the Top & Bottom system. Fig. 21(a) illustrates a region (region) according to two-dimensional image subtitle data. Note that, with this example, three objects (object) are included in the region.

First, the subtitle processing unit 123 converts the size of the above region (region) according to two-dimensional image subtitle data into a size adapted to the Top & Bottom system as shown in Fig. 21(b), and generates bitmap data of the size thereof.

Next, the subtitle processing unit 123 takes, as shown in Fig. 21(c), the bitmap data after size conversion as a component of the region (region) in the stereoscopic image subtitle data, i.e., takes the bitmap data after size conversion as the object of the region on the left eye image (leftview) side, and also takes as the object of the region on the right eye image (Right view) side.

The subtitle processing unit 123 converts, as described above, the two-dimensional image subtitle data into stereoscopic image subtitle data, and creates segments such as PCS, RCS, CDS, ODS, and so forth corresponding to this stereoscopic image subtitle data.

Next, the subtitle processing unit 123 sets the left eye SR and right eye SR on the area of the region (region) in the stereoscopic image subtitle data based on the user's operations or automatically, as shown in Fig. 21(c). The left eye SR is set to an area including the object within the region on the left eye image side. The right eye SR is set to an area including the object within the region on the left eye image side.

The subtitle processing unit 123 creates an SCS segment including the area information of the left eye SR and right eye SR, target frame information, and disparity information, set as described above. For example, the subtitle processing unit 123 creates an SCS including in common the area information of the left eye SR and right eye SR, target frame information, and disparity information, or creates SCS segments including the area information of the left eye SR and right eye SR, target frame information, and disparity information, respectively.

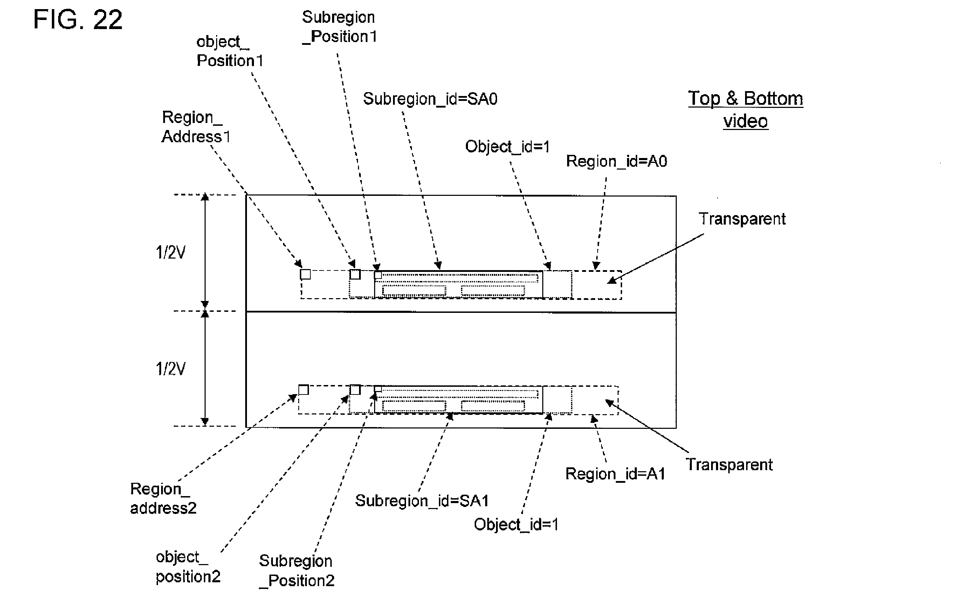

Fig. 22 illustrates an example of a region (region) and an object (object) according to stereoscopic image subtitle data created as described above. Here, the start position of the region on the left eye image (left view) side is "Region_address1", and the start position of the region on the right eye image (right view) side is "Region_address2". The object on the left eye image side has "Object_Position1" as the start position, and has "Object_id = 1". Also, the object on the right eye image side has "Object_Position2" as the start position, and has "Object_id = 1".

Also, Fig. 22 illustrates an example of the left eye SR and right eye SR set as described above. The left eye SR has "Subregion_position1" as the start position, and has "Subregion_id = SA0". The right eye SR has "Subregion_position2" as the start position, and has "Subregion_id = SA1".

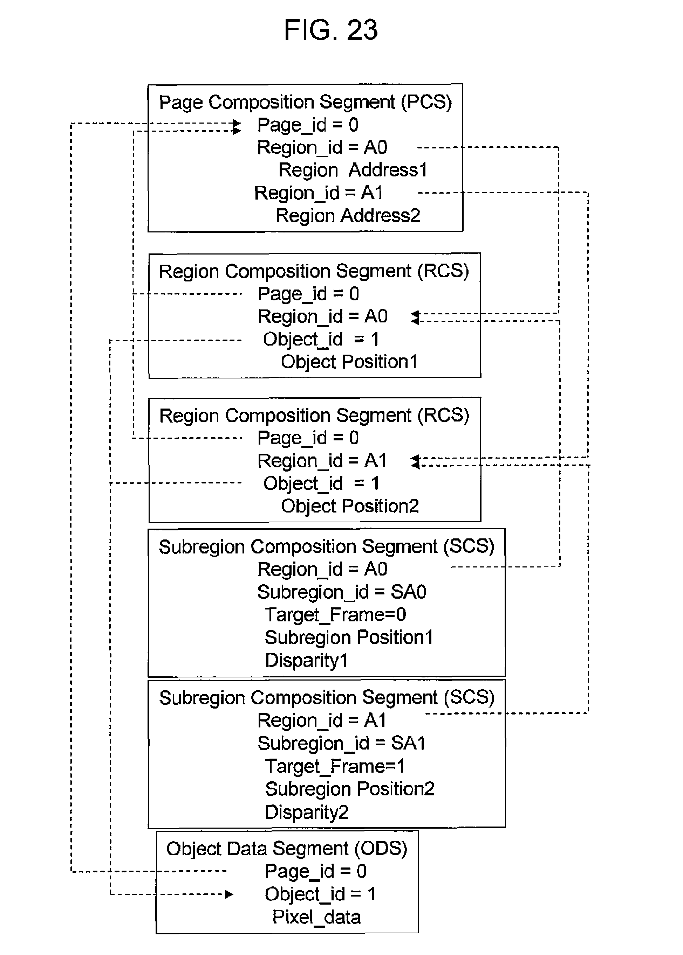

Fig. 23 illustrates a creation example (example 1) of each segment of stereoscopic image subtitle data in the case that the transmission format of stereoscopic image data is the Top & Bottom system. With this creation example, with a PCS (page composition segment), the start position (region_address1) of a region (Region_id = 0A) on the left eye image (left view) side is specified. Also, with this creation example, with the PCS (page composition segment), the start position (region_address2) of the region (Region_id = 0A) on the right eye image (right view) side is specified.

With the RCS (region composition segment) of "Region_id = A0", the ODS of "Object_id = 1" is referenced, and the start position "object_position1" of the object thereof is specified. Also, with the RCS of "Region_id = A1", the ODS of "Object_id = 1" is referenced, and the start position "object_position2" of the object thereof is specified.

Also, with this creation example, the SCSes (Subregion composition segment) of the left eye SR and right eye SR are separately created. With the SCS of the left eye SR of "Subregion_id = SA0", the start position (Subregion Position1) of the left eye SR is specified. Also, the target frame information (Target_Frame = 0) of the left eye SR, the disparity information (Disparity1) of the left eye SR, and the command information (Command1) of display on/off are included in this SCS of the left eye SR.

Also, with the SCS of the right eye SR of "Subregion_id = SA1", the start position (Subregion Position2) of the right eye SR is specified. Also, the target frame information (Target_Frame = 1) of the right eye SR, the disparity information (Disparity2) of the right eye SR, and the command information (Command2) of display on/off are included in this SCS of the right eye SR.

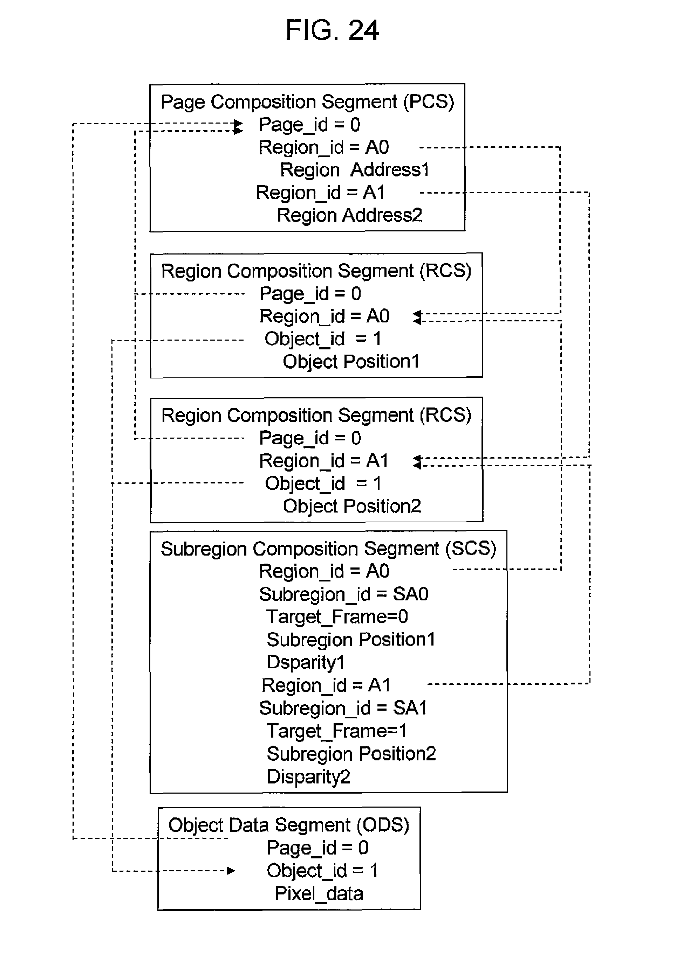

Fig. 24 illustrates another creation example (example 2) of each segment of stereoscopic image subtitle data in the case that the transmission format of stereoscopic image data is the Top & Bottom system. With this creation example, in the same way as the creation example (example 1) shown in Fig. 23, segments of PCS, RCS, CDS, CDS, and ODS are created. Also, with this creation example, the SCSes of the left eye SR and right eye SR are created in common. That is to say, various types of information of the left eye SR and right eye SR are included in the common SCS.

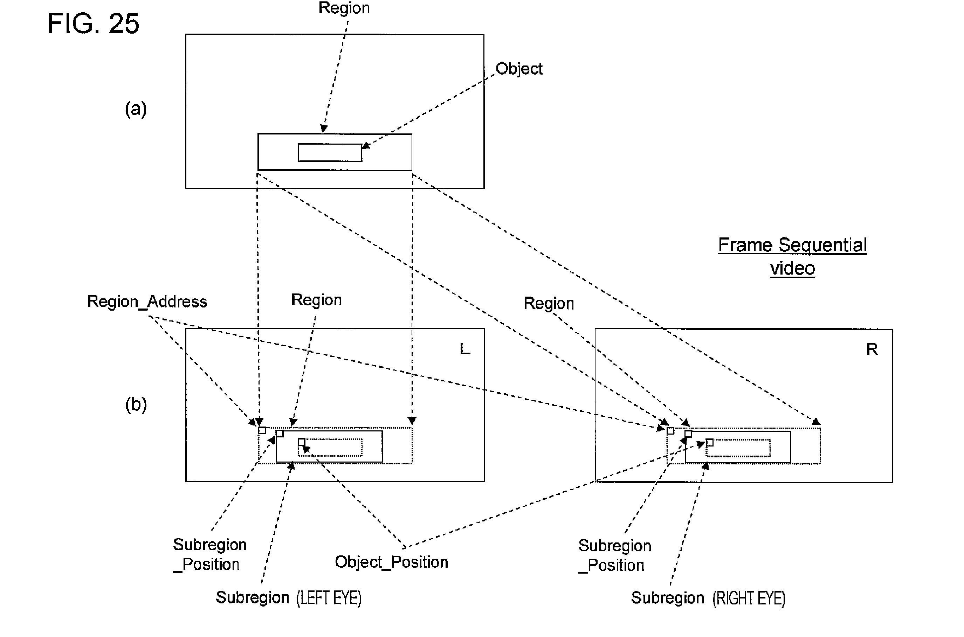

Fig. 25 conceptually illustrates a creation method of stereoscopic image subtitle data in the case that the transmission format of stereoscopic image data is the Frame Sequential system. Fig. 25(a) illustrates a region (region) according to two-dimensional image subtitle data. Note that, with this example, one object (object) is included in the region. In the case that the transmission format of stereoscopic image data is the Frame Sequential system, this two-dimensional image subtitle data is taken as stereoscopic image subtitle data without change. In this case, segments of DDS, PCS, RCS, ODS, and so forth corresponding to the two-dimensional image subtitle data become segments of DDS, PCS, RCS, ODS, and so forth corresponding to the stereoscopic image subtitle data without change.

Next, the subtitle processing unit 123 sets the left eye SR and right eye SR on the area of the region (region) in the stereoscopic image subtitle data based on the user's operations or automatically, as shown in Fig. 25(b). The left eye SR is set to an area including the object corresponding to the left eye subtitle. The right eye SR is set to an area including the object corresponding to the right eye subtitle.

The subtitle processing unit 123 creates an SCS segment including the area information, target frame information, and disparity information of the left eye SR and right eye SR, set as described above. For example, the subtitle processing unit 123 creates an SCS including in common the area information, target frame information, and disparity information of the left eye SR and right eye SR, or creates SCS segments including the area information, target frame information, and disparity information of the left eye SR and right eye SR, respectively.

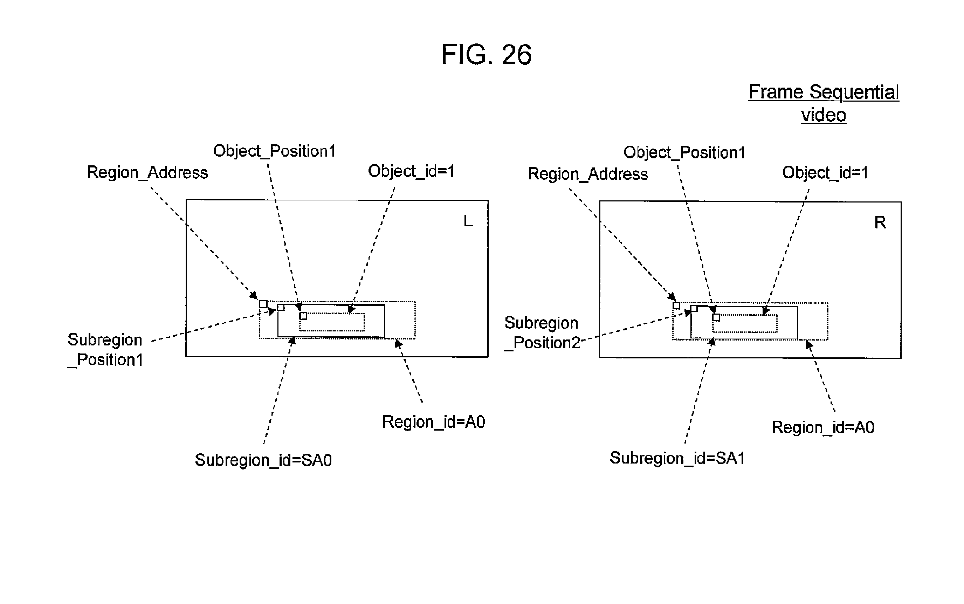

Fig. 26 illustrates an example of a region (region) and an object (object) according to stereoscopic image subtitle data created as described above. Here, the start position of the region is "Region_address". Also, the object on the left eye image (left view) side has "Object_Position1" as the start position, and has "Object_id = 1". Also, the object on the right eye image (Right view) side has "Object_Position1" as the start position, and has "Object_id = 1".

Also, Fig. 26 illustrates an example of the left eye SR and right eye SR set as described above. The left eye SR has "Subregion_position1" as the start position, and has "Subregion_id = SA0". The right eye RP has "Subregion_position2" as the start position, and has "Subregion_id = SA1".

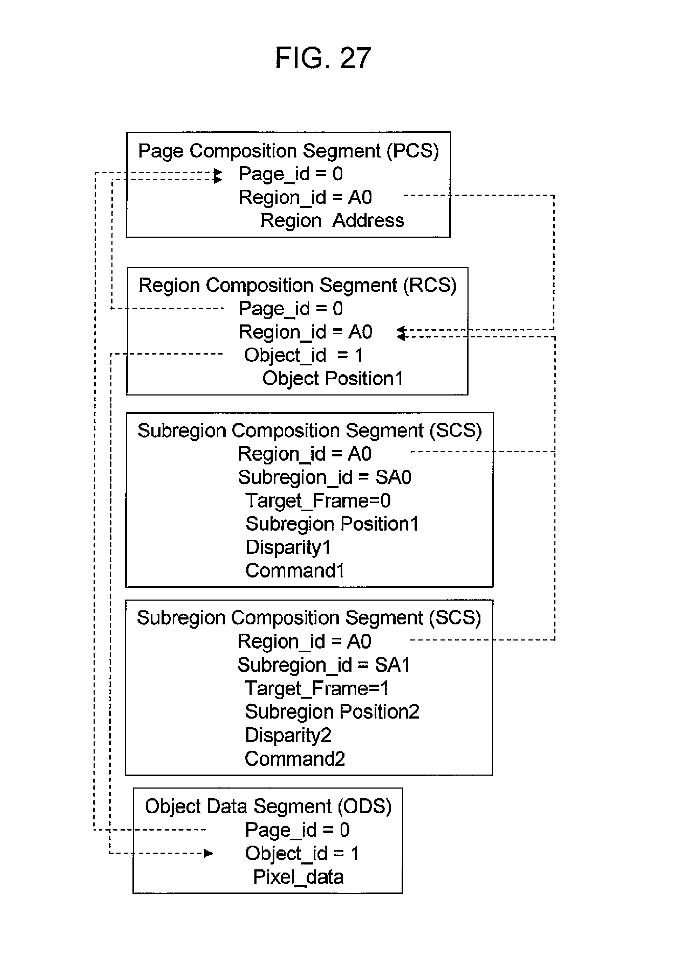

Fig. 27 illustrates a creation example (example 1) of each segment of stereoscopic image subtitle data in the case that the transmission format of stereoscopic image data is the Frame Sequential system. With this creation example, with a PCS (page composition segment), the start position (region_address) of a region (Region_id = 0A) is specified. Also, with a RCS (region composition segment) of "Region_id = 0", an ODS of "Object_id = 1" is referenced. Also, with this RCS, the start position "object_position1" of the object is specified.

Also, with this creation example, the SCSes (Subregion composition segment) of the left eye SR and right eye SR are separately created. With the SCS of the left eye SR of "Subregion_id = SA0", the start position (Subregion Position1) of the left eye SR is specified. Also, the target frame information (Target_Frame = 0) of the left eye SR, the disparity information (Disparity1) of the left eye SR, and the command information (Command1) of display on/off are included in this SCS of the left eye SR.

Also, with the SCS of the right eye SR of "Subregion_id = SA1", the start position (Subregion Position2) of the right eye SR is specified. Also, the target frame information (Target_Frame = 1) of the right eye SR, the disparity information (Disparity2) of the right eye SR, and the command information (Command2) of display on/off are included in this SCS of the right eye SR.

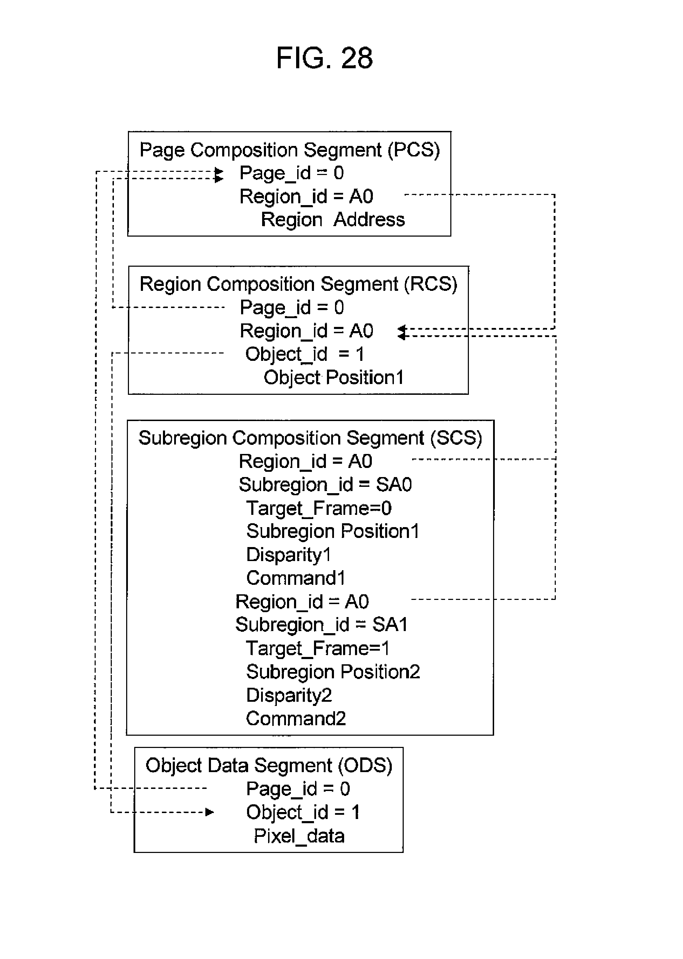

Fig. 28 illustrates another creation example (example 2) of each segment of stereoscopic image subtitle data in the case that the transmission format of stereoscopic image data is the Frame Sequential system. With this creation example, in the same way as the creation example (example 1) shown in Fig. 27, segments of PCS, RCS, and ODS are created. Also, with this creation example, the SCSes of the left eye SR and right eye SP are created in common. That is to say, various types of information of the left eye SR and right eye SR are included in the common SCS.

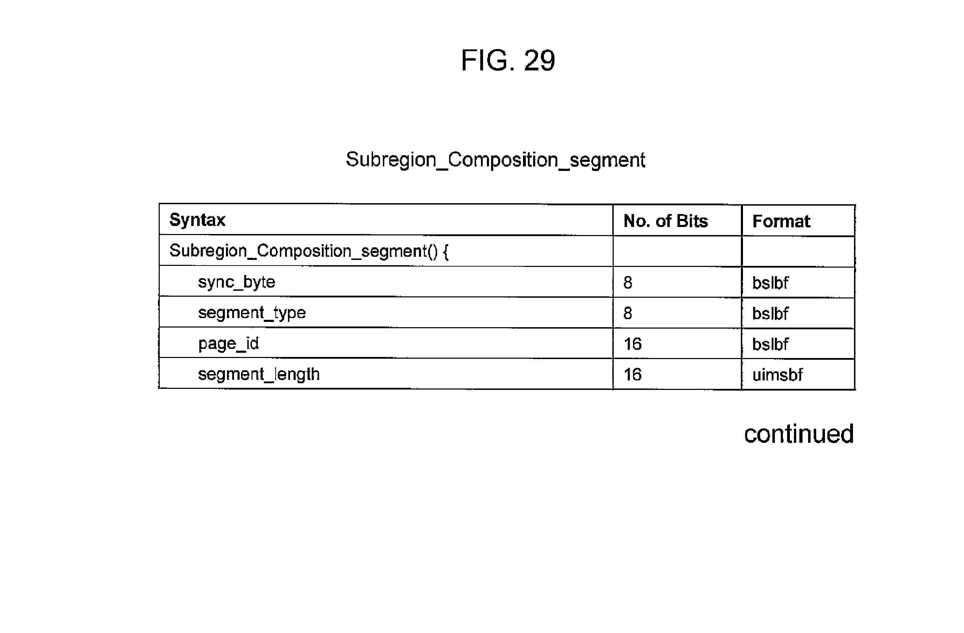

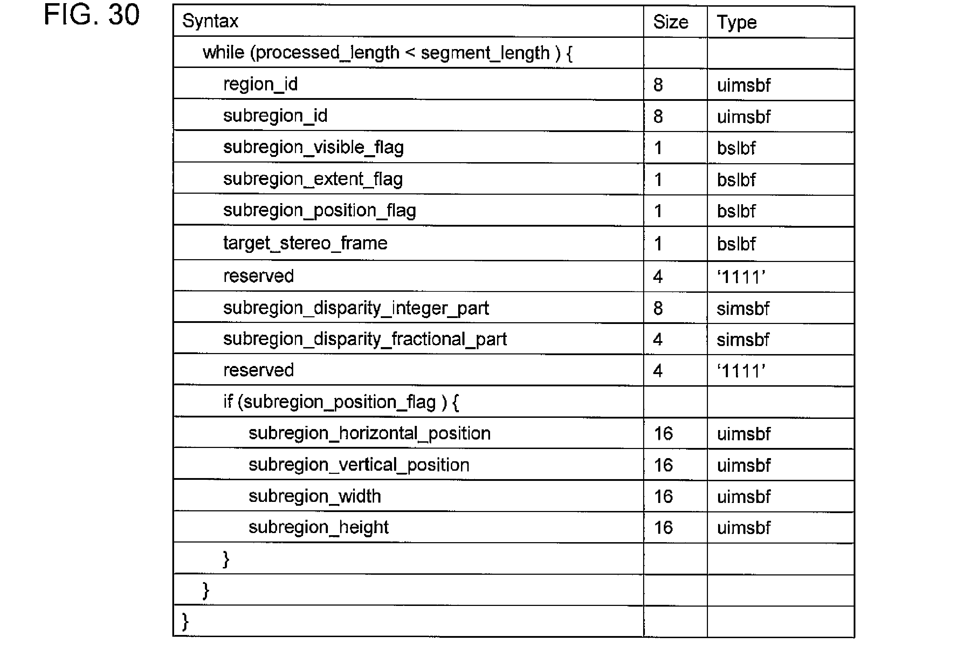

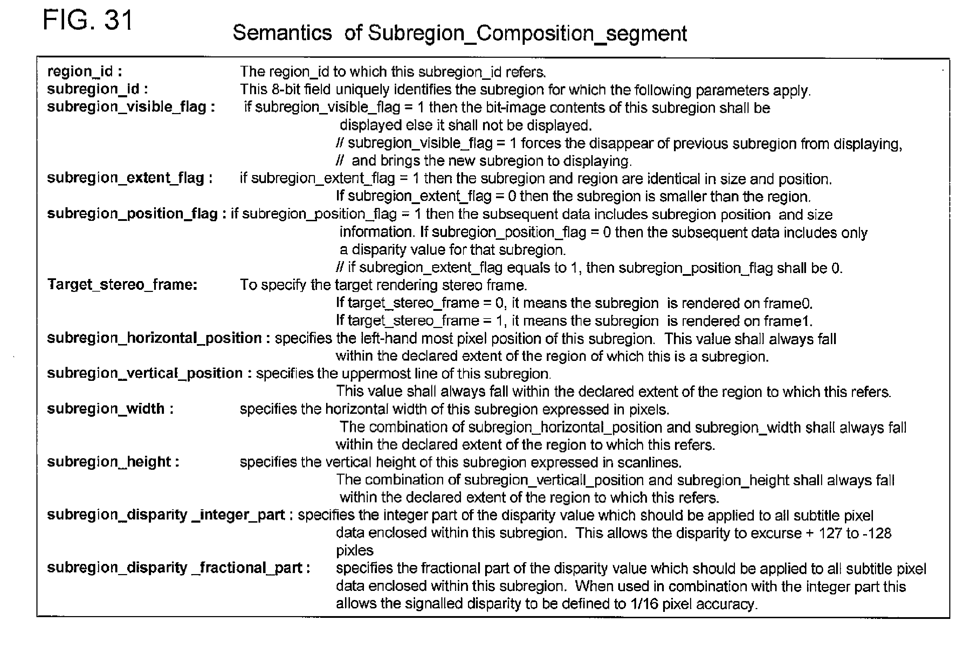

Fig. 29 and Fig. 30 illustrate a structure example (syntax) of an SCS (Subregion Composition segment). Fig. 31 illustrates principal data stipulation contents (semantics) of an SCS. Various types of information of "Sync_byte", "segment_type", "page_id", and "segment_length" are included in this structure. "segment_type" is 8-bit data indicating a segment type, and here set to "0x49" indicating an SCS (see Fig. 11). "segment_length" is 8-bit data indicating the length (size) of a segment.

Fig. 30 illustrates a portion including the substantial information of an SCS. With this structure example, the display control information of the left eye SR and right eye SR, i.e., the area information, target frame information, disparity information, and display on/off command information of the left eye SR and right eye SR can be transmitted. Note that this structure example can have the display control information of an arbitrary number of sub regions.

"region_id" is 8-bit information indicating the identifier of a region (region). "subregion_id" is 8-bit information indicating the identifier of a sub region (Subregion). "subregion_visible_flag" is 1-bit flag information (command information) for controlling on/off of display (superimposition) of the corresponding sub region. "subregion_visible_flag = 1" indicates display on of the corresponding sub region, and also indicates display off of the corresponding sub region displayed before thereof.

"subregion_extent_flag" is 1-bit flag information indicating whether or not a sub region and a region are the same regarding the sizes and positions.
"subregion_extent_flag = 1" indicates that a sub region and a region are the same regarding the sizes and positions. On the other hand, "subregion_extent_flag = 0" indicates that a sub region is smaller than a region.

"subregion_position_flag" is 1-bit flag information indicating whether or not the subsequent data includes the information of the area (position and size) of a sub region.
"subregion_position_flag = 1" indicates that the subsequent data includes the information of the area (position and size) of a sub region. On the other hand,
"subregion_position_flag = 0" indicates that the subsequent data does not include the information of the area (position and size) of a sub region.

"target_stereo_frame" is 1-bit information for specifying the target frame (frame to be displayed) of the corresponding sub region. This "target_stereo_frame" makes up target frame information. "target_stereo_frame = 0" indicates that the corresponding sub region is a sub region displayed on a frame 0 (e.g., left eye frame or base view frame or the like). On the other hand, "target_stereo_frame = 1" indicates that the corresponding sub region is a sub region displayed on a frame 1 (e.g., right eye frame or non-base view frame or the like).

"subregion_disparity_integer_part" is 8-bit information indicating an integer pixel (pixel) precision part (integer part) of disparity information (disparity) for shifting the display position of the corresponding sub region horizontally. "subregion_disparity_fractional_part" is 4-bit information indicating a sub pixel precision part (fractional part) of disparity information (disparity) for shifting the corresponding region and partition horizontally. Here, the disparity information (disparity) is, as described above, information for shift-adjusting the display position of the corresponding sub region to provide disparity to the display positions of the left eye subtitle within the left eye SR, and the right eye subtitle within the right eye SR as described above.

"Subregion_horizontal_position" is 16-bit information indicating the position of the left edge of a sub region that is a rectangular area. "Subregion_vertical_position" is 16-bit information indicating the position of the upper edge of a sub region that is a rectangular area. "subregion_width" is 16-bit information indicating the size (number of pixels) in the horizontal direction of a sub region that is a rectangular area. "subregion_height" is 16-bit information indicating the size (number of pixels) in the vertical direction of a sub region that is a rectangular area. These position information and size information make up the area information of a sub region.

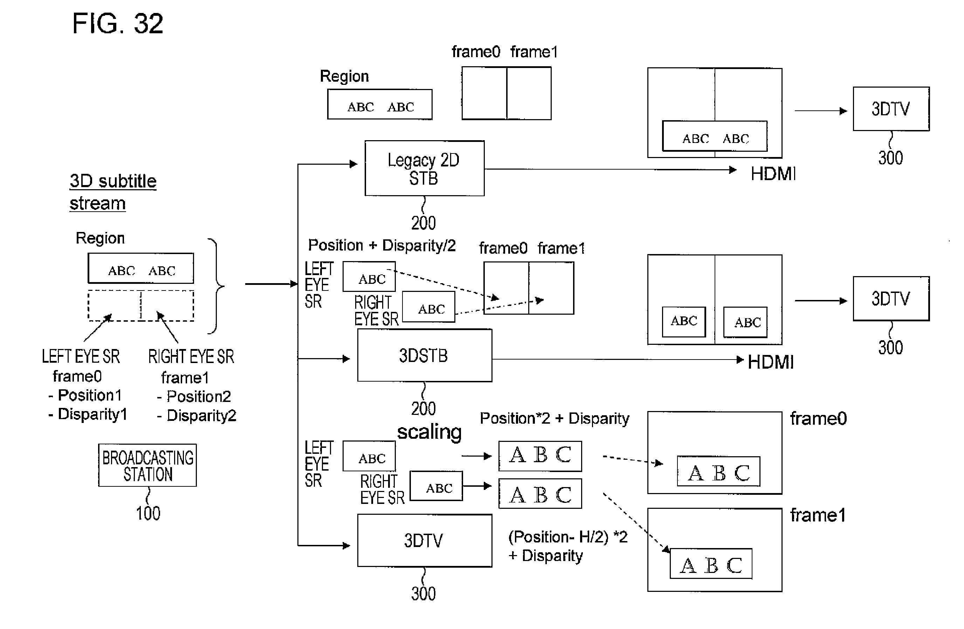

Fig. 32 schematically illustrates the flows of stereoscopic image data and subtitle data (including display control information) from the broadcasting station 100 to the television receiver 300 via the set top box 200, or from the broadcasting station 100 directly to the television receiver 300. In this case, stereoscopic image subtitle data conforming to the Side By Side (Side-by-Side) system is generated at the broadcasting station 100. The stereoscopic image data is transmitted by being included in a video data stream, and the stereoscopic image subtitle data is transmitted by being included in a subtitle data stream.

First, description will be made regarding a case where the stereoscopic image data and subtitle data (including display control information) are transmitted from the broadcasting station 100 to the set top box 200, and this set top box 200 is a legacy 2D compatible device (Legacy 2D STB). The set top box 200 generates, based on subtitle data (excluding display control information of a sub region), the display data of a region for displaying the left eye subtitle and right eye subtitle, and superimposes this display data on stereoscopic image data to obtain output stereoscopic image data. The superimposed position in this case is the position of the region.

The set top box 200 transmits this output stereoscopic image data to the television receiver 300, for example, through the HDMI digital interface. In this case, the transmission format of the stereoscopic image data from the set top box 200 to the television receiver 300 is the Side By Side (Side-by-Side) system, for example.

In the event that the television receiver 300 is a 3D compatible device (3D TV), the television receiver 300 subjects the stereoscopic image data conforming to the Side By Side system transmitted from the set top box 200 to 3D signal processing to generate the data of a left eye image and a right eye image on which the subtitle is superimposed. The television receiver 300 then displays a binocular disparity image (left eye image and right eye image) on a display panel such as an LCD or the like for allowing the user to recognize the stereoscopic image.

Next, description will be made regarding a case where the stereoscopic image data and subtitle data (including display control information) are transmitted from the broadcasting station 100 to the set top box 200, and this set top box 200 is a 3D compatible device (3D STB). The set top box 200 generates, based on the subtitle data (excluding the display control information of a sub region), the display data of a region for displaying the left eye subtitle and right eye subtitle. The set top box 200 then extracts display data corresponding to the left eye SR, and the display data corresponding to the right eye SR from the display data of this region.

The set top box 200 then superimposes the display data corresponding to the left eye SR and right eye SR on the stereoscopic image data to obtain output stereoscopic image data. In this case, the display data corresponding to the left eye SR is superimposed on a frame portion (left eye image frame portion) indicated by the frame 0 that is the target frame information of this left eye SR. Also, the display data corresponding to the right eye SR is superimposed on a frame portion (right eye image frame portion) indicated by the frame 1 that is the target frame information of this right eye SR.

In this case, the display data corresponding to the left eye SR is superimposed on a position obtained by shifting the position indicated by Position1 that is the area information of the left eye SR of the stereoscopic image data of the Side By Side system by half of Disparity1 that is the disparity information of this left eye SR. Also, the display data corresponding to the left eye SR is superimposed on a position obtained by shifting the position indicated by Position2 that is the area information of the right eye SR of the stereoscopic image data of the Side By Side system by half of Disparity2 that is the disparity information of this left eye SR.

The set top box 200 then transmits the output stereoscopic image data obtained as described above to the television receiver 300 through, for example, the HDMI digital interface. In this case, the transmission format of the stereoscopic image data from the set top box 200 to the television receiver 300 is the Side By Side (Side-by-Side) system, for example.

In the event that the television receiver 300 is a 3D compatible device (3D TV), the television receiver 300 subjects the stereoscopic image data conforming to the Side By Side system transmitted from the set top box 200 to 3D signal processing to generate the data of a left eye image and a right eye image on which the subtitle is superimposed. The television receiver 300 then displays a binocular disparity image (left eye image and right eye image) on a display panel such as an LCD or the like for allowing the user to recognize the stereoscopic image.

Next, description will be made regarding a case where the stereoscopic image data and subtitle data (including display control information) are transmitted from the broadcasting station 100 to the television receiver 300, and this television receiver 300 is a 3D compatible device (3D TV). The television receiver 300 generates, based on the subtitle data (excluding the display control information of a sub region), the display data of a region for displaying the left eye subtitle and right eye subtitle. The television receiver 300 then extracts display data corresponding to the left eye SR, and the display data corresponding to the right eye SR (right eye display data) from the display data of this region.

The television receiver 300 subjects the display data corresponding to the left eye SR to scaling double in the horizontal direction to obtain left eye display data compatible with full resolution. The television receiver 300 then superimposes this left eye display data on the left eye image data with full resolution corresponding to the frame 0 that is the target frame information of this left eye SR. Specifically, the television receiver 300 superimposes this left eye display data on the left eye image data with full resolution obtained by subjecting the left eye image portion of the stereoscopic image data of the Side By Side system to scaling double in the horizontal direction to generate left eye image data on which the subtitle is superimposed.

The television receiver 300 subjects the display data corresponding to the right eye SR to scaling double in the horizontal direction to obtain right eye display data compatible with full resolution. The television receiver 300 then superimposes this right eye display data on the right eye image data with full resolution corresponding to the frame 1 that is the target frame information of this right eye SR. Specifically, the television receiver 300 superimposes this right eye display data on the right eye image data with full resolution obtained by subjecting the right eye image portion of the stereoscopic image data of the Side By Side system to scaling double in the horizontal direction to generate right eye image data on which the subtitle is superimposed.

In this case, the left eye display data is superimposed on a position obtained by shifting a position where Position1 that is the area information of the left eye SR is double the left eye image data with full resolution by Disparity1 that is the disparity information of this left eye SR. Also, in this case, the right eye display data is superimposed on a position obtained by shifting a position where H/2 is subtracted from Position2 that is the area information of the right eye SR, and is double the right eye image data with full resolution by Disparity2 that is the disparity information of this left eye SR.

The television receiver 300 displays, based on the left eye image data and right eye image data on which the subtitle generated as described above is superimposed, a binocular disparity image (left eye image and right eye image) for allowing the user to recognize a stereoscopic image on a display panel such as an LCD or the like.

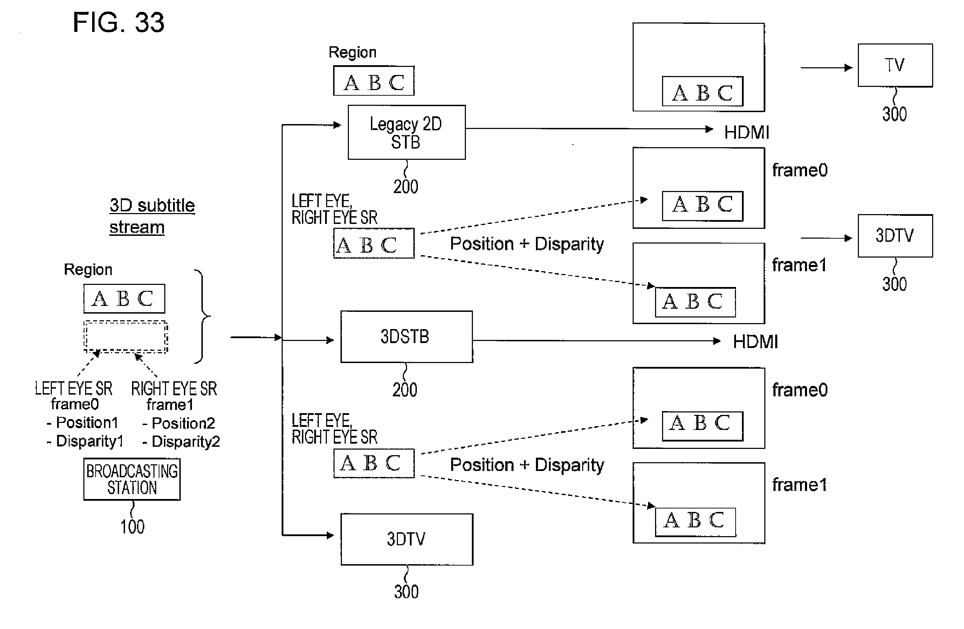

Fig. 33 schematically illustrates the flows of stereoscopic image data and subtitle data (including display control information) from the broadcasting station 100 to the television receiver 300 via the set top box 200, or from the broadcasting station 100 directly to the television receiver 300. In this case, stereoscopic image subtitle data conforming to the MVC (Multi-view Video Coding) system is generated at the broadcasting station 100. In this case, stereoscopic image data is made up of the image data of a base view (left eye image data) and the image data of a non-base view (right eye image data). This stereoscopic image data is transmitted by being included in a video data stream, and the stereoscopic image subtitle data is transmitted by being included in a subtitle data stream.

First, description will be made regarding a case where the stereoscopic image data and subtitle data (including display control information) are transmitted from the broadcasting station 100 to the set top box 200, and this set top box 200 is a legacy 2D compatible device (Legacy 2D STB). The set top box 200 generates, based on subtitle data (excluding display control information of a sub region), the display data of a region for displaying the left eye subtitle and right eye subtitle, and superimposes this display data on the base view (left eye image data) to obtain output image data. The superimposed position in this case is the position of the region.

The set top box 200 transmits this output image data to the television receiver 300, for example, through the HDMI digital interface. Even if the television receiver 300 is either a 2D compatible device (2D TV) or 3D compatible device (3D TV), the television receiver 300 displays a 2D image on the display panel.

Next, description will be made regarding a case where the stereoscopic image data and subtitle data (including display control information) are transmitted from the broadcasting station 100 to the set top box 200, and this set top box 200 is a 3D compatible device (3D STB). The set top box 200 generates, based on the subtitle data (excluding the display control information of a sub region), the display data of a region for displaying the left eye subtitle and right eye subtitle. The set top box 200 then extracts display data corresponding to the left eye SR, and the display data corresponding to the right eye SR from the display data of this region.

The set top box 200 superimposes the display data corresponding to the left eye SR on the image data of the base view (left eye image) indicated by the frame 0 that is the target frame information of this left eye SR to obtain the output image data of the base view (left eye image) on which the left eye subtitle is superimposed. In this case, the display data corresponding to the left eye SR is superimposed on a position where the position indicated by Position1 that is the area information of the left eye SR of the image data of the base view (left eye image) is shifted by an amount equivalent to Disparity1 that is the disparity information of this left eye SR.

Also, the set top box 200 superimposes the display data corresponding to the right eye SR on the image data of the non-base view (right eye image) indicated by the frame 1 that is the target frame information of this left eye SR to obtain the output image data of the non-base view (left eye image) on which the right eye subtitle is superimposed. In this case, the display data corresponding to the right eye SR is superimposed on a position where the position indicated by Position2 that is the area information of the right eye SR of the image data of the non-base view (right eye image) is shifted by an amount equivalent to Disparity2 that is the disparity information of this right eye SR.

The set top box 200 then transmits the image data of the base view (left eye image) and non-base view (right eye image) obtained as described above to the television receiver 300 through, for example, the HDMI digital interface. In this case, the transmission format of the stereoscopic image data from the set top box 200 to the television receiver 300 is the frame packing (Frame Packing) system, for example.

In the event that the television receiver 300 is a 3D compatible device (3D TV), the television receiver 300 subjects the stereoscopic image data conforming to the Frame Packing system transmitted from the set top box 200 to 3D signal processing to generate the data of a left eye image and a right eye image on which the subtitle is superimposed. The television receiver 300 then displays a binocular disparity image (left eye image and right eye image) on a display panel such as an LCD or the like for allowing the user to recognize the stereoscopic image.

Next, description will be made regarding a case where the stereoscopic image data and subtitle data (including display control information) are transmitted from the broadcasting station 100 to the television receiver 300, and this television receiver 300 is a 3D compatible device (3D TV). The television receiver 300 generates, based on the subtitle data (excluding the display control information of a sub region), the display data of a region for displaying the left eye subtitle and right eye subtitle. The television receiver 300 then extracts display data corresponding to the left eye SR, and the display data corresponding to the right eye SR from the display data of this region.

The television receiver 300 superimposes the display data corresponding to the left eye SR on the image data of the base view (left eye image) indicated by the frame 0 that is the target frame information of this left eye SR to obtain the output image data of the base view (left eye image) on which the left eye subtitle is superimposed. In this case, the display data corresponding to the left eye SR is superimposed on a position where the position indicated by Position1 that is the area information of the left eye SR of the image data of the base view (left eye image) is shifted by an amount equivalent to Disparity1 that is the disparity information of this left eye SR.

Also, the television receiver 300 superimposes the display data corresponding to the right eye SR on the image data of the non-base view (right eye image) indicated by the frame 1 that is the target frame information of this right eye SR to obtain the output image data of the non-base view (left eye image) on which the right eye subtitle is superimposed. In this case, the display data corresponding to the right eye SR is superimposed on a position where the position indicated by Position2 that is the area information of the right eye SR of the image data of the non-base view (right eye image) is shifted by an amount equivalent to Disparity2 that is the disparity information of this right eye SR.

The television receiver 300 then displays a binocular disparity image (left eye image and right eye image) for allowing the user to recognize the stereoscopic image on the display panel such as an LCD or the like based on the image data of the base view (left eye image) and the non-base view (right eye image) on which the subtitle generated as described above is superimposed.

With the transmission data generating unit 110 shown in Fig. 2, the bit stream data BSD output from the multiplexer 122 is a multiplexed data stream having a video data stream and a subtitle data stream. Stereoscopic image data is included in the video data stream. Also, the stereoscopic image (three-dimensional image) subtitle data conforming to the transmission format of the stereoscopic image data thereof is included in the subtitle data stream.

This stereoscopic image subtitle data has the data of a left eye subtitle, and the data of a right eye subtitle. Therefore, the reception side can readily generate, based on this subtitle data, the display data of the left eye subtitle to be superimposed on the left eye image data that the stereoscopic image data has, and the display data of the right eye subtitle to be superimposed on the right eye image data that the stereoscopic image data has. Thus, facilitation of processing can be realized.

Also, with the transmission data generating unit 110 shown in Fig. 2, display control information is also included in the bit stream data BSD output from the multiplexer 122 in addition to stereoscopic image data and stereoscopic image subtitle data. This display control information includes the display control information relating to the left eye SR and right eye SR (area information, target frame information, disparity information). Therefore, the reception side can readily superimpose only the left eye subtitle within the left eye SR, and the subtitle within the right eye SR on the target frames for display, respectively. The reception side can then provide disparity to the display positions of the left eye subtitle within the left eye SR, and the subtitle within the right eye SR, whereby consistency of perspective as to each object within an image can be kept in the optimal state with display of a subtitle (caption).

Also, with the transmission data generating unit 110 shown in Fig. 2, an SCS segment of which the disparity information has sequentially been updated can be transmitted from the subtitle processing unit 123 during a subtitle display period, whereby the display positions of the left eye subtitle within the left eye SR, and the right eye subtitle within the right eye SR can dynamically be controlled. Thus, the reception side can dynamically change disparity to be provided between the left eye subtitle and right eye subtitle in sync with change in the contents of an image.

Also, with the transmission data generating unit 110 shown in Fig. 2, the disparity information or the like included in an SCS segment created at the subtitle processing unit 123 is arranged so as to have sub pixel precision. Therefore, the reception side can smooth shift operation in the event of shift-adjusting the display positions of the left eye subtitle within the left eye SR, and the right eye subtitle within the right eye SR using disparity information that is sequentially updated during a subtitle display period, which can contribute to improvement in image quality.

### Description of Set Top Box

Description will return to Fig. 1. The set top box 200 receives bit stream data (transport stream) BSD transmitted over broadcast waves from the broadcasting station 100. Stereoscopic image data including left eye image data and right eye image data, and audio data are included in this bit stream data BSD. Also, stereoscopic image subtitle data (including display control information) for displaying a subtitle (caption) is included in this bit stream data BSD.

The set top box 200 includes a bit stream processing unit 201. This bit stream processing unit 201 extracts stereoscopic image data, audio data, and subtitle data from the bit stream data BSD. This bit stream processing unit 201 uses the stereoscopic image data, subtitle data, and so forth to generate stereoscopic image data on which a subtitle is superimposed.

In this case, disparity can be provided between a left eye subtitle to be superimposed on a left eye image, and a right eye subtitle to be superimposed on a right eye image. For example, as described above, the stereoscopic image subtitle data to be transmitted from the broadcasting station 100 can be generated so as to provide disparity between the left eye subtitle and the right eye subtitle. Also, for example, as described above, disparity information is included in the display control information appended to the stereoscopic image subtitle data transmitted from the broadcasting station 100, and based on this disparity information, disparity can be provided between the left eye subtitle and the right eye subtitle. In this way, disparity is provided between the left eye subtitle and the right eye subtitle, whereby the user can recognize a subtitle (caption) in front of an image.

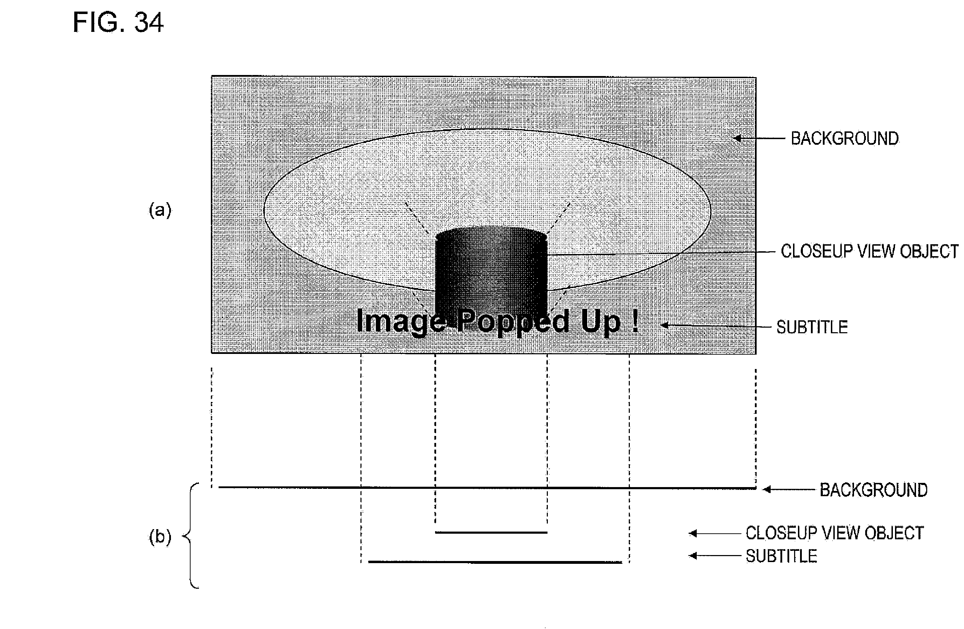

Fig. 34(a) illustrates a display example of a subtitle (caption) on an image. This display example is an example wherein a caption is superimposed on an image made up of background and a closeup view object. Fig. 34(b) illustrates perspective of background, a closeup view object, and a caption, and indicates that the caption is recognized on the nearest side.

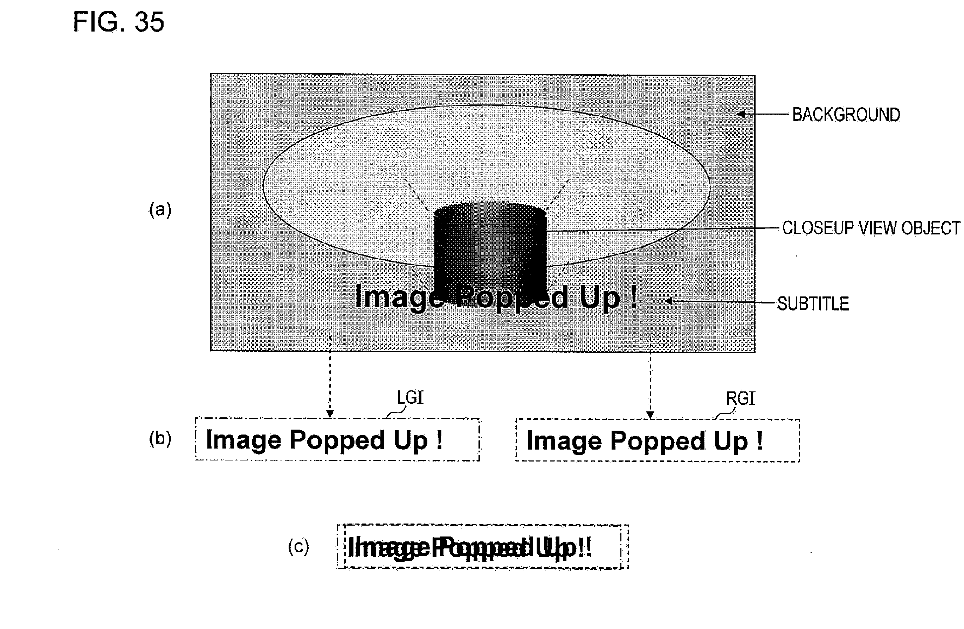

Fig. 35(a) illustrates a display example of a subtitle (caption) on an image, in the same way as Fig. 34(a). Fig. 34(b) illustrates a left eye caption LGI to be superimposed on a left eye image, and a right eye caption RGI to be superimposed on a right eye image. Fig. 34(c) illustrates that a caption is recognized on the nearest side, and accordingly, disparity is provided between the left eye caption LGI and the right eye caption RGI.

### Configuration Example of Set Top Box

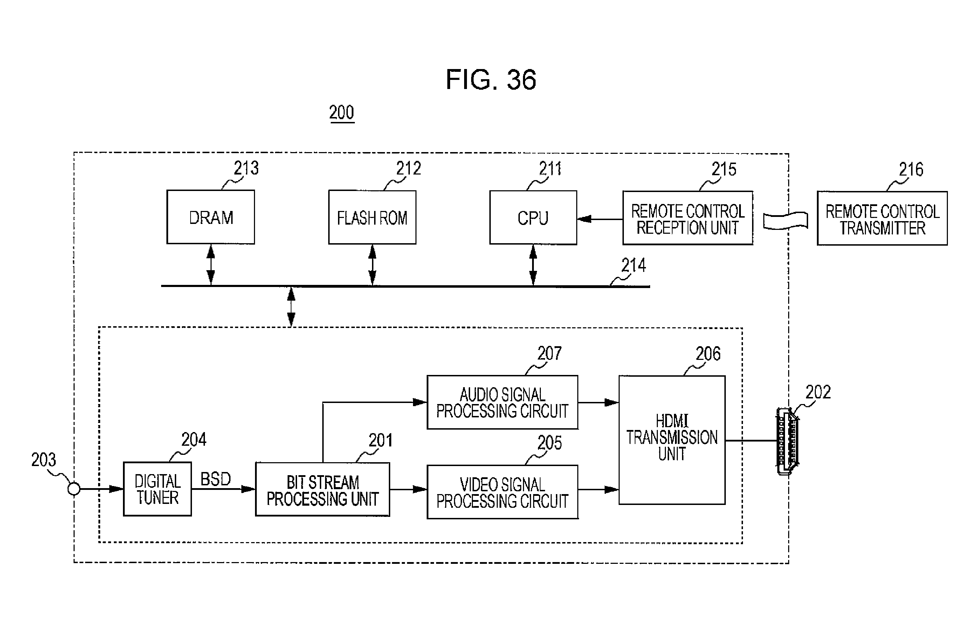

A configuration example of the set top box 200 will be described. Fig. 36 illustrates a configuration example of the set top box 200. This set top box 200 includes a bit stream processing unit 201, an HDMI terminal 202, an antenna terminal 203, a digital tuner 204, a video signal processing circuit 205, an HDMI transmission unit 206, and an audio signal processing circuit 207. Also, this set top box 200 includes a CPU 211, flash ROM 212, DRAM 213, an internal bus 214, a remote control reception unit 215, and a remote control transmitter 216.

The antenna terminal 203 is a terminal for inputting the television broadcast signals received at a reception antenna (not shown). The digital tuner 204 processes the television broadcast signals input to the antenna terminal 203 to output predetermined bit stream data (transport stream) BSD corresponding to the user's selected channel.

The bit stream processing unit 201 extracts, as described above, stereoscopic image data, audio data, stereoscopic image subtitle data (including display control information), and so forth from the bit stream data BSD. The bit stream processing unit 201 outputs the audio data. Also, this bit stream processing unit 201 synthesizes the display data of a left eye subtitle and a right eye subtitle as to the stereoscopic image data to obtain output stereoscopic image data on which the subtitle is superimposed. The display control information includes the area information, target frame information, and disparity information of the left eye SR and right eye SR.

In this case, the bit stream processing unit 201 generates, based on the subtitle data (excluding the display control information of a sub region), the display data of a region for displaying the left eye subtitle and right eye subtitle. The bit stream processing unit 201 then extracts, based on the area information of the left eye SR and right eye SR, display data corresponding to the left eye SR, and display data corresponding to the right eye SR from the display data of this region.

The bit stream processing unit 201 then superimposes the display data corresponding to the left eye SR and right eye SR on the stereoscopic image data to obtain output stereoscopic image data (stereoscopic image data for display). In this case, the display data corresponding to the left eye SR is superimposed on a frame portion (left eye image frame portion) indicated by the frame 0 that is the target frame information of this left eye SR. Also, the display data corresponding to the right eye SR is superimposed on a frame portion (right eye image frame portion) indicated by the frame 1 that is the target frame information of this right eye SR. At this time, the bit stream processing unit 201 shift-adjusts the display positions (superimposed positions) of the left eye subtitle within the left eye SR, and the right eye subtitle within the right eye SR based on the disparity information.

The video signal processing circuit 205 subjects the output stereoscopic image data obtained at the bit stream processing unit 201 to image quality adjustment processing or the like according to need, and supplies the output stereoscopic image data after processing to the HDMI transmission unit 206. The audio signal processing circuit 207 subjects the audio data output from the bit stream processing unit 201 to audio quality adjustment processing or the like according to need, and supplies the audio data after processing to the HDMI transmission unit 206.

The HDMI transmission unit 206 transmits, for example, uncompressed image data and audio data from the HDMI terminal 202 using communication conforming to HDMI. In this case, the data is transmitted using a TMDS channel of HDMI, and accordingly, the image data and audio data are subjected to packing, and output from the HDMI transmission unit 206 to the HDMI terminal 202.

For example, when the transmission format of the stereoscopic image data from the broadcasting station 100 is the Side By Side system, the TMDS transmission format conforms to the Side By Side system (see Fig. 32). Also, for example, when the transmission format of the stereoscopic image data from the broadcasting station 100 is the Top & Bottom system, the TMDS transmission format conforms to the Top & Bottom system. Also, for example, when the transmission format of the stereoscopic image data from the broadcasting station 100 is the MVC system, the TMDS transmission format conforms to the Frame Packing system (see Fig. 33).

The CPU 211 controls the operation of the units of the set top box 200. The flash ROM 212 performs storage of control software and storage of data. The DRAM 213 makes up a work area of the CPU 211. The CPU 211 loads software and data read out from the flash ROM 212 onto the DRAM 213 to activate the software, and controls the units of the set top box 200.

The remote control reception unit 215 receives the remote control signal (remote control code) transmitted from the remote control transmitter 216, and supplies to the CPU 211. The CPU 211 controls, based on this remote control code, the units of the set top box 200. The CPU 211, flash ROM 212, and DRAM 213 are connected to the internal bus 214.

The operation of the set top box 200 will be briefly described. The television broadcast signals input to the antenna terminal 203 are supplied to the digital tuner 204. At this digital tuner 204, the television broadcast signals are processed, and predetermined bit stream data (transport stream) BSD corresponding to the user's selected channel is output.

The bit stream data BSD output from the digital tuner 204 is supplied to the bit stream processing unit 201. At this bit stream processing unit 201, stereoscopic image data, audio data, stereoscopic image subtitle data (including display control information), and so forth are extracted from the bit stream data BSD. At the bit stream processing unit 201, the display data (bitmap data) of the left eye subtitle and right eye subtitle is synthesized as to the stereoscopic image data, and output stereoscopic image data on which the subtitles are superimposed is obtained.

The output stereoscopic image data obtained at the bit stream processing unit 201 is supplied to the video signal processing circuit 205. At this video signal processing circuit 205, the output stereoscopic image data is also subjected to image quality adjustment processing or the like according to need. The output stereoscopic image data after processing output from this video signal processing circuit 205 is supplied to the HDMI transmission unit 206.

Also, the audio data obtained at the bit stream processing unit 201 is supplied to the audio signal processing circuit 207. At this audio signal processing circuit 207, the audio data is subjected to processing such as audio quality adjustment processing or the like according to need. The audio data after processing output from this audio signal processing circuit 207 is supplied to the HDMI transmission unit 206. The stereoscopic image data and audio data supplied to the HDMI transmission unit 206 are transmitted from the HDMI terminal 202 to the HDMI cable 400 using the TMDS channel of HDMI.

### Configuration Example of Bit Stream Processing Unit

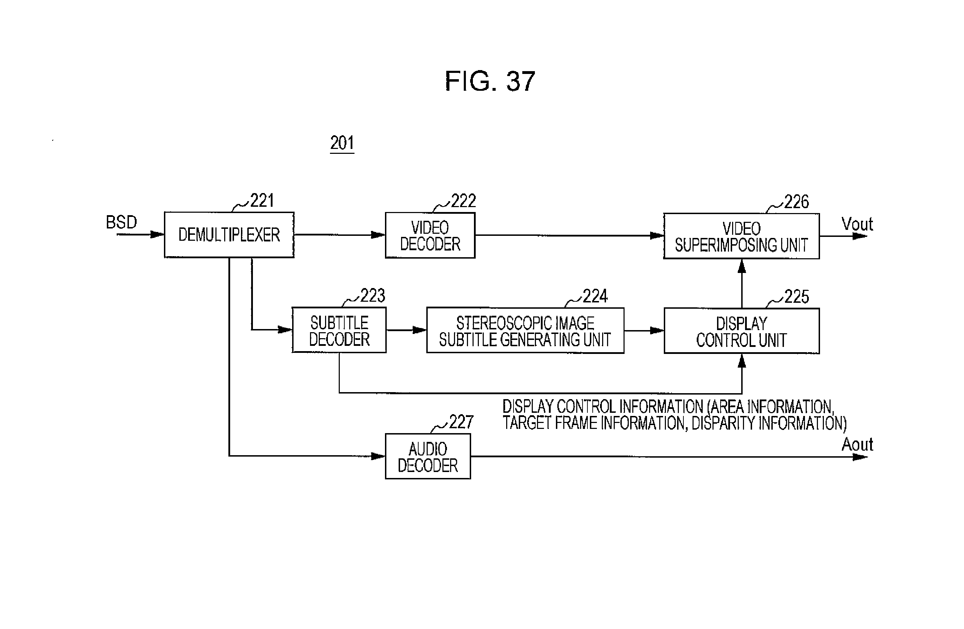

Fig. 37 illustrates a configuration example of the bit stream processing unit 201. This bit stream processing unit 201 has a configuration corresponding to the transmission data generating unit 110 shown in the above Fig. 2. This bit stream processing unit 201 includes a demultiplexer 221, a video decoder 222, a subtitle decoder 223, a stereoscopic image subtitle generating unit 224, a display control unit 225, a video superimposing unit 226, and an audio decoder 227.

The demultiplexer 221 extracts video, audio, and subtitle packets from the bit stream data BSD, and transmits to the decoders. Note that the demultiplexer 221 extracts information such as PMT, EIT, and so forth inserted into the bit stream data BSD, and transmits to the CPU 211. As described above, Stream_content('0x03' = DVB subtitles) & Component_type (for 3D target) are described in a component descriptor under the EIT. Thus, it can be recognized that stereoscopic image subtitle data is included in a subtitle data stream. Accordingly, the CPU 211 can recognize that stereoscopic image subtitle data is included in a subtitle data stream, based on this description.

The video decoder 222 performs processing opposite to the processing of the video encoder 119 of the transmission data generating unit 110 mentioned above. Specifically, the video decoder 222 restructures a video data stream from a video packet extracted at the demultiplexer 221, and performs decoding processing to obtain stereoscopic image data including left eye image data and right eye image data. Examples of the transmission format of this stereoscopic image data include the Side By Side system, Top & Bottom system, Frame Sequential system, and MVC system.

The subtitle decoder 223 performs processing opposite to the processing of the subtitle encoder 125 of the transmission data generating unit 110 mentioned above. Specifically, the subtitle decoder 223 restructures a subtitle data stream from a subtitle packet extracted at the demultiplexer 221, and performs decoding processing to obtain stereoscopic image subtitle data (including display control information). The stereoscopic image subtitle generating unit 224 generates, based on the stereoscopic image subtitle data (excluding the display control information), the display data (bitmap data) of the left eye subtitle and right eye subtitle to be superimposed on the stereoscopic image data. This stereoscopic image subtitle generating unit 224 makes up a display data generating unit.

The display control unit 225 controls, based on the display control information (area information, target frame information, and disparity information of the left eye SR and right eye SR), display data to be superimposed on the stereoscopic image data. Specifically, the display control unit 225 extracts, based on the area information of the left eye SR and right eye SR, the display data corresponding to the left eye SR, and the display data corresponding to the right eye SR from the display data (bitmap data) of the left eye subtitle and right eye subtitle to be superimposed on the stereoscopic image data.

Also, the display control unit 225 supplies the display data corresponding to the left eye SR and right eye SR to the video superimposing unit 226 to superimpose these on the stereoscopic image data. In this case, the display data corresponding to the left eye SR is superimposed on a frame portion (left eye image frame portion) indicated by the frame 0 that is the target frame information of this left eye SR. Also, the display data corresponding to the right eye SR is superimposed on a frame portion (right eye image frame portion) indicated by the frame 1 that is the target frame information of this right eye SR. At this time, the display control unit 225 shift-adjusts the display positions (superimposed positions) of the left eye subtitle within the left eye SR, and the right eye subtitle within the right eye SR based on the disparity information.

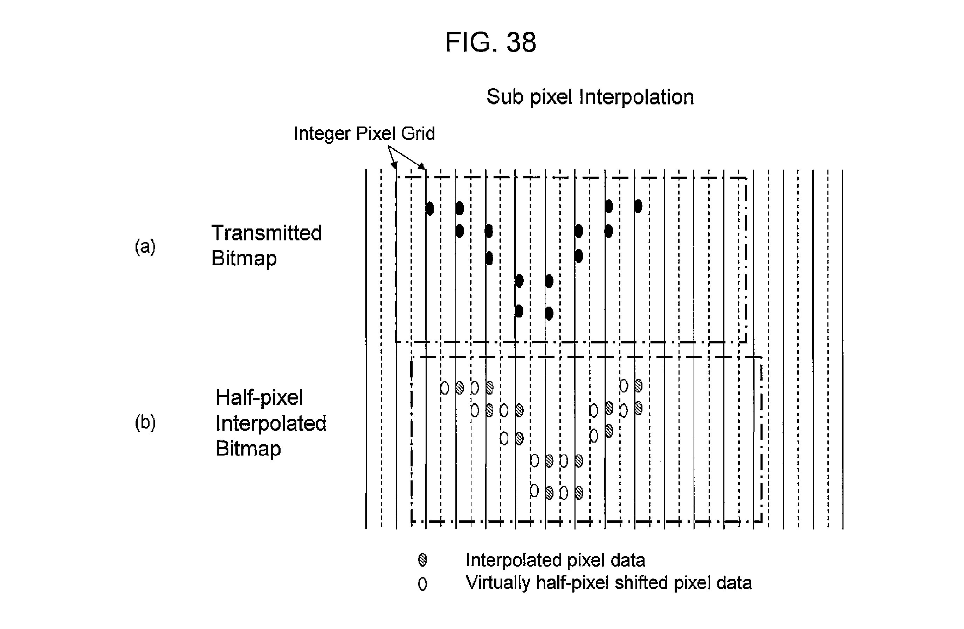

As described above, the disparity information included in the display control information has sub pixel precision (see Fig. 8). Therefore, the display control unit 225 uses interpolation processing to perform shift adjustment with sub pixel precision. Fig. 38 schematically illustrates an interpolation processing example in the case of performing 1/2 pixel (pixel) worth of shifting in the horizontal direction. Black circles in Fig. 38(a) indicate reception data. White circles in Fig. 38(b) indicate a state in which the reception data is simply shifted in the horizontal direction by 1/2 pixel worth. However, the data indicated by the white circles are not the data of pixel (pixel) positions. Therefore, the shift adjusting unit 225 subjects the data indicated by white circles to interpolation processing to generate the data of pixel positions indicated by circles with hatching in Fig. 38(b), and takes this as data after shift adjustment.

The video superimposing unit 226 obtains output stereoscopic image data Vout. In this case, the video superimposing unit 226 superimposes the display data (bitmap data) of the left eye SR and right eye SR shift-adjusted at the display control unit 225 on the corresponding target frame portion as to the stereoscopic image data obtained at the video decoder 222. The video superimposing unit 226 then outputs this output stereoscopic image data Vout to the outside of the bit stream processing unit 201.

Also, the audio decoder 227 performs processing opposite to the processing of the audio encoder 120 of the transmission data generating unit 110 mentioned above. Specifically, this audio decoder 227 restructures an audio elementary stream from an audio packet extracted at the demultiplexer 221, and performs decoding processing to obtain audio data Aout. The audio decoder 227 then outputs the audio data Aout to the outside of the bit stream processing unit 201.

The operation of the bit stream processing unit 201 shown in Fig. 37 will briefly be described. The bit stream data BSD output from the digital tuner 204 (see Fig. 36) is supplied to the demultiplexer 221. At this demultiplexer 221, video, audio, and subtitle packets are extracted from the bit stream data BSD, and supplied to the decoders.

At the video decoder 222, a video data stream is restructured from the video packets extracted at the demultiplexer 221, further subjected to decoding processing, and stereoscopic image data including left eye image data and right eye image data is obtained. This stereoscopic image data is supplied to the video superimposing unit 226.

Also, at the subtitle decoder 223, a subtitle data stream is restructured from the subtitle packets extracted at the demultiplexer 221, further subjected to decoding processing, and stereoscopic image subtitle data (including display control information) is obtained. This subtitle data is supplied to the stereoscopic image subtitle generating unit 224.

At the stereoscopic image subtitle generating unit 224, based on the stereoscopic image subtitle data (excluding display control information), the display data (bitmap data) of the left eye subtitle and right eye subtitle to be superimposed on the stereoscopic image data is generated. This display data is supplied to the display control unit 225. At the display control unit 225, based on the display control information (area information, target frame information, and disparity information of the left eye SR and right eye SR), superimposition of the display data as to the stereoscopic image data is controlled.

Specifically, the display data of the left eye SR and right eye SR is extracted from the display data generated at the generating unit 224, and subjected to shift adjustment. Thereafter, the display data of the left eye SR and right eye SR subjected shift adjustment is supplied to the video superimposing unit 226 so as to be superimposed on the target frame of the stereoscopic image data. At the video superimposing unit 226, the display data shift-adjusted at the display control unit 225 is superimposed as to the stereoscopic image data obtained at the video decoder 222, and output stereoscopic image data Vout is obtained. This output stereoscopic image data Vout is output to the outside of the bit stream processing unit 201.

Also, at the audio decoder 227, an audio elementary stream is restructured from the audio packets extracted at the demultiplexer 221, further subjected to decoding processing, and audio data Aout corresponding to the above-mentioned stereoscopic image data Vout for display is obtained. This audio data Aout is output to the outside of the bit stream processing unit 201.

With the set top box 200 shown in Fig. 36, the bit stream data BSD output from the digital tuner 204 is a multiplexed data stream having a video data stream and a subtitle data stream. Stereoscopic image data is included in the video data stream. Also, stereoscopic image (three-dimensional image) subtitle data conforming to the transmission format of the stereoscopic image data thereof is included in the subtitle data stream.

This stereoscopic image subtitle data has the data of a left eye subtitle, and the data of a right eye subtitle. Therefore, the stereoscopic image subtitle generating unit 224 of the bit stream processing unit 201 can readily generate the display data of a left eye subtitle to be superimposed on the left eye image data that the stereoscopic image data has. Also, the stereoscopic image subtitle generating unit 224 of the bit stream processing unit 201 can readily generate the display data of a right eye subtitle to be superimposed on the right eye image data that the stereoscopic image data has. Thus, facilitation of processing is realized.

Also, with the set top box 200 shown in Fig. 36, display control information is also included in the bit stream data BSD output from the digital tuner 204 in addition to stereoscopic image data and stereoscopic image subtitle data. This display control information includes display control information (area information, target frame information, disparity information) relating to the left eye SR and right eye SR. Therefore, only the left eye subtitle within the left eye SR, and the right eye subtitle within the right eye SR can readily be displayed in a manner superimposed on the target frames, respectively. Also, disparity can be provided to the display positions of the left eye subtitle within the left eye SR, and the subtitle within the right eye SR, and with display of the subtitle (caption), consistency of perspective as to each object within an image can be kept in the optimal state.

### Description of Television Receiver

Description will return to Fig. 1. The television receiver 300 receives the stereoscopic image data transmitted from the set top box 200 via the HDMI cable 400. This television receiver 300 includes a 3D signal processing unit 301. This 3D signal processing unit 301 subjects the stereoscopic image data to processing (decoding processing) conforming to the transmission format to generate left eye image data and right eye image data.

### Configuration Example of Television Receiver

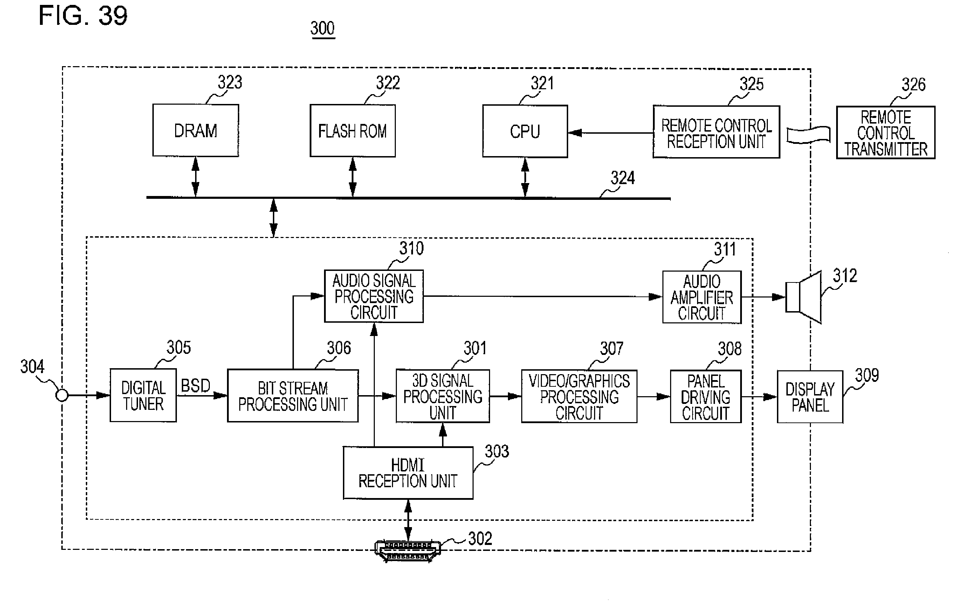

A configuration example of the television receiver 300 will be described. Fig. 39 illustrates a configuration example of the television receiver 300. This television receiver 300 includes a 3D signal processing unit 301, an HDMI terminal 302, an HDMI reception unit 303, an antenna terminal 304, a digital tuner 305, and a bit stream processing unit 306.

Also, this television receiver 300 includes a video/graphics processing circuit 307, a panel driving circuit 308, a display panel 309, an audio signal processing circuit 310, an audio amplifier circuit 311, and a speaker 312. Also, this television receiver 300 includes a CPU 321, flash ROM 322, DRAM 323, an internal bus 324, a remote control reception unit 325, and a remote control transmitter 326.

The antenna terminal 304 is a terminal for inputting television broadcast signals received at the reception antenna (not shown). The digital tuner 305 processes the television broadcast signals input to the antenna terminal 304 to output predetermined bit stream data (transport stream) BSD corresponding to the user's selected channel. The bit stream processing unit 306 extracts stereoscopic image data, audio data, stereoscopic image subtitle data (including display control information), and so forth from the bit stream data BSD.

Also, this bit stream processing unit 306 is configured in the same way as the bit stream processing unit 201 of the set top box 200. This bit stream processing unit 306 synthesizes the display data of the left eye subtitle and right eye subtitle as to stereoscopic image data to generate output stereoscopic image data on which the subtitles are superimposed, and outputs this. Note that, for example, in the event that the transmission formation of stereoscopic image data is the Side By Side system, Top & Bottom system, or the like, this bit stream processing unit 306 subjects the stereoscopic image data to scaling processing, and outputs left eye image data and right eye image data with full resolution (see the television receiver 300 portion in Fig. 32). Also, the bit stream processing unit 306 outputs audio data.

The HDMI reception unit 303 receives uncompressed image data and audio data supplied to the HDMI terminal 302 via the HDMI cable 400 using communication conforming to HDMI. This HDMI reception unit 303 of which the version thereof is, for example, HDMI1.4a is in a state in which stereoscopic image data can be handled.

The 3D signal processing unit 301 subjects the stereoscopic image data received at the HDMI reception unit 303 to decoding processing to generate left eye image data and right eye image data with full resolution. The 3D signal processing unit 301 performs decoding processing conforming to the TMDS transmission format. Note that the 3D signal processing unit 301 performs nothing as to the left eye image data and right eye image data with full resolution obtained at the bit stream processing unit 306.

The video/graphics processing circuit 307 generates, based on the left eye image data and right eye image data generated at the 3D signal processing unit 301, image data for displaying a stereoscopic image. Also, the video/graphics processing circuit 307 subjects the image data to image quality adjustment processing according to need. Also, the video/graphics processing circuit 307 synthesizes the data of superimposed information such as a menu, a program table, or the like as to the image data according to need. The panel driving circuit 308 drives the display panel 309 based on the image data output from the video/graphics processing circuit 307. The display panel 309 is configured of an LCD (Liquid Crystal Display), a PDP (Plasma Display Panel) or the like, for example.

The audio signal processing circuit 310 subjects the audio data received at the HDMI reception unit 303 or obtained at the bit stream processing unit 306 to necessary processing such as D/A conversion or the like. The audio amplifier circuit 311 amplifies the audio signal output from the audio signal processing circuit 310, and supplies to the speaker 312.

The CPU 321 controls the operation of the units of the television receiver 300. The flash ROM 322 performs storage of the control software and storage of data. The DRAM 323 makes up a work area of the CPU 321. The CPU 321 loads software and data read out from the flash ROM 322 onto the DRAM 323 to activate the software, and controls the units of the television receiver 300.

The remote control reception unit 325 receives the remote control signal (remote control code) transmitted from the remote control transmitter 326, and supplies to the CPU 321. The CPU 321 controls, based on this remote control code, the units of the television receiver 300. The CPU 321, flash ROM 322, and DRAM 323 are connected to the internal bus 324.

The operation of the television receiver 300 shown in Fig. 39 will be briefly described. At the HDMI reception unit 303, the stereoscopic image data and audio data transmitted from the set top box 200 connected to the HDMI terminal 302 via the HDMI cable 400 are received. The stereoscopic image data received at this HDMI reception unit 303 is supplied to the 3D signal processing unit 301. Also, the audio data received at this HDMI reception unit 303 is supplied to the audio signal processing circuit 310.

The television broadcast signals input to the antenna terminal 304 are supplied to the digital tuner 305. At this digital tuner 305, the television broadcast signals are processed, and predetermined bit stream data (transport stream) BSD corresponding to the user's selected channel is output.

The bit stream data BSD output from the digital tuner 305 is supplied to the bit stream processing unit 306. This bit stream processing unit 306 extracts stereoscopic image data, audio data, stereoscopic image subtitle data (including display control information), and so forth from the bit stream data BSD. Also, at this bit stream processing unit 306, the display data of a left eye subtitle and a right eye subtitle is synthesized as to the stereoscopic image data, and output stereoscopic image data on which the subtitles are superimposed (left eye image data and right eye image data with full resolution) is generated. This output stereoscopic image data is supplied to the video/graphics processing circuit 307 through the 3D signal processing unit 301.

At the 3D signal processing unit 301, the stereoscopic image data received at the HDMI reception unit 303 is subjected to decoding processing, and left eye image data and right eye image data with full resolution are generated. The left eye image data and right eye image data are supplied to the video/graphics processing circuit 307. At this video/graphics processing circuit 307, image data for displaying a stereoscopic image is generated based on the left eye image data and right eye image data, and synthesis processing of superimposed information data such as image quality adjustment processing, OSD (On Screen Display) or the like is also performed according to need.

The image data obtained at this video/graphics processing circuit 307 is supplied to the panel driving circuit 308. Therefore, a stereoscopic image is displayed using the display panel 309. For example, the left eye image according to the left eye image data, and the right eye image according to the right eye image data are alternately displayed on the display panel 309 in a time sharing manner. A viewer wears, for example, shutter glasses which alternately open a left eye shutter and a right eye shutter in sync with display of the display panel 309, whereby only the left eye image can be viewed by the left eye, and only right eye image can be viewed by the right eye, and a stereoscopic image can be perceived.

Also, the audio data obtained at the bit stream processing unit 306 is supplied to the audio signal processing circuit 310. At this audio signal processing circuit 310, the audio data received at the HDMI reception unit 303, or obtained at the bit stream processing unit 306 is subjected to necessary processing such as D/A conversion or the like. This audio data is supplied to the speaker 312 after being amplified at the audio amplifier circuit 311. Therefore, audio corresponding to the display image of the display panel 309 is output from the speaker 312.

As described above, with the image transmission/reception system 10 shown in Fig. 1, a multiplexed data stream having a video data stream and a subtitle data stream is transmitted from the broadcasting station 100 (transmission data generating unit 201) to the set top box 200 or television receiver 300. Stereoscopic image data is included in the video data stream. Also, stereoscopic image (three-dimensional image) subtitle data corresponding to the transmission format of the stereoscopic image data thereof is included in the subtitle data stream.

This stereoscopic image subtitle data has the data of a left eye subtitle, and the data of a right eye subtitle. Therefore, the reception side (set top box 200, television receiver 300) can readily generate the display data of the left eye subtitle to be superimposed on the left eye image data that stereoscopic image data has. Also, this reception side can readily generate the display data of the right eye subtitle to be superimposed on the right eye image data that stereoscopic image data has. Thus, facilitation of the processing of the bit data processing unit 201 is realized.

Also, with the image transmission/reception system 10 shown in Fig. 1, display control information is also included in the bit stream data BSD output from the transmission data generating unit 110 of the broadcasting station 100 in addition to stereoscopic image data and stereoscopic image subtitle data. This display control information includes the display control information relating to the left eye SR and right eye SR (area information, target frame information, disparity information). Therefore, the reception side can readily superimpose only the left eye subtitle within the left eye SR, and the subtitle within the right eye SR on the target frames for display, respectively. The reception side can then provide disparity to the display positions of the left eye subtitle within the left eye SR, and the subtitle within the right eye SR, whereby consistency of perspective as to each object within an image can be kept in the optimal state with display of a subtitle (caption).

Also, with the image transmission/reception system 10 shown in Fig. 1, an SCS segment of which the disparity information has sequentially been updated can be transmitted from the transmission data generating unit 110 of the broadcasting station 100 during a subtitle display period, whereby the display positions of the left eye subtitle within the left eye SR, and the right eye subtitle within the right eye SR can dynamically be controlled. Thus, the reception side can dynamically change disparity to be provided between the left eye subtitle and right eye subtitle in sync with change in the contents of an image.

Also, with the image transmission/reception system 10 shown in Fig. 1, the disparity information included in an SCS segment created at the transmission data generating unit 110 of the broadcasting station 100 is arranged so as to have sub pixel precision. Therefore, the reception side can smooth shift operation in the event of shift-adjusting the display positions of the left eye subtitle within the left eye SR, and the right eye subtitle within the right eye SR using disparity information that is sequentially updated during a subtitle display period, which can contribute to improvement in image quality.

### 2. Modification

Note that the above embodiment has shown the image transmission/reception system 10 which is configured of the broadcasting station 100, set top box 200, and television receiver 300. However, the television receiver 300 includes, as shown in Fig. 39, a bit stream processing unit 306 which serves as the same way as the bit stream processing unit 201 within the set top box 200. Accordingly, as shown in Fig. 40, an image transmission/reception system 10A made up of the broadcasting station 100 and television receiver 300 can also be conceived.

Also, the above embodiment has shown an example wherein a data stream (bit stream data) including stereoscopic image data is broadcasted from the broadcasting station 100. However, the present invention may also be similarly applied to a system having a configuration wherein this data stream is distributed to a reception terminal using a network such as the Internet or the like.

Also, the above embodiment has shown that the set top box 200 and the television receiver 300 are connected by the HDMI digital interface. However, even in the event that these are connected by a similar digital interface (including not only cable but also radio) of the HDMI digital interface, the present invention may be applied in the same way.

Also, the above embodiment has shown a case where a subtitle (caption) is handled as superimposed information. However, the present invention may similarly be applied to a case where other superimposed information such as graphics information, text information, or the like is handled.

Also, with the above embodiment, an arrangement has been made wherein an SCS segment is newly defined, and this segment is used to supply display control information from the broadcasting station 100 to the set top box 200. However, a method for supplying display control information to the set top box 200 or television receiver 300 is not restricted to this, and for example, an arrangement may be made wherein the set top box 200 obtains display control information from the Internet according to need.

### Industrial Applicability

The present invention may be applied to an image transmission/reception system whereby display of superimposed information such as a subtitle (caption) or the like can be performed in a manner superimposed on a stereoscopic image.

### Reference Signs List

- 10, 10A: image transmission/reception system
- 100: broadcasting station
- 110: transmission data generating unit
- 111L, 111R: camera
- 112: video framing unit
- 113: disparity vector detecting unit
- 114: microphone
- 115: data extracting unit
- 115a: data recording medium
- 116 to 118: switchover switch
- 119: video encoder
- 120: audio encoder
- 121: subtitle encoder
- 122: disparity information creating unit
- 123: subtitle processing unit
- 124: display control information generating unit
- 125: subtitle encoder
- 126: multiplexer
- 200: set top box (STB)
- 201: bit stream processing unit
- 202: HDMI terminal
- 203: antenna terminal
- 204: digital tuner
- 205: video signal processing circuit
- 206: HDMI transmission unit
- 207: audio signal processing circuit
- 211: CPU
- 215: remote control reception unit
- 216: remote control transmitter
- 221: demultiplexer
- 222: video decoder
- 223: subtitle decoder
- 224: stereoscopic image subtitle generating unit
- 225: display control unit
- 226: video superimposing unit
- 227: audio decoder
- 300: television receiver (TV)
- 301: 3D signal processing unit
- 302: HDMI terminal
- 303: HDMI reception unit
- 304: antenna terminal
- 305: digital tuner
- 306: bit stream processing unit
- 307: video/graphics processing circuit
- 308: panel driving circuit
- 309: display panel
- 310: audio signal processing circuit
- 311: audio amplifier circuit
- 312: speaker
- 321: CPU
- 325: remote control reception unit
- 326: remote control transmitter
- 400: HDMI cable

## Claims

1. A stereoscopic image data transmission device comprising:
an image data output unit configured to output stereoscopic image data in a predetermined transmission format having left eye image data and right eye image data;
a superimposed information data output unit configured to output the data of superimposed information to be superimposed on an image made up of said left eye image data and said right eye image data;
a superimposed information data processing unit configured to convert the data of said superimposed information output from said superimposed information data output unit into superimposed information data for transmission having the data of left eye superimposed information corresponding to said left eye image data included in said stereoscopic image data in said predetermined transmission format, and the data of right eye superimposed information corresponding to said right eye image data included in said stereoscopic image data in said predetermined transmission format;
a display control information generating unit configured to set a first display area corresponding to the display position of said left eye superimposed information, and a second display area corresponding to the display position of said right eye superimposed information to the inside of the display area of said superimposed information data for transmission output from said superimposed information data processing unit, and to generate display control information including the area information of each of said first display area and said second display area, the information of a target frame for displaying each superimposed information included in said first display area and said second display area, and disparity information for shift-adjusting each display position of superimposed information included in said first display area and said second display area; and
a data transmission unit configured to transmit a multiplexed data stream having a first data stream including said stereoscopic image data output from said image data output unit, and a second data stream including said superimposed information data for transmission output from said superimposed information data processing unit and said display control information generated at said display control information generating unit.

2. The stereoscopic image data transmission device according to Claim 1, further comprising:
a disparity information output unit configured to output disparity information between a left eye image made up of said left eye image data, and a right eye image made up of said right eye image data;
wherein said superimposed information data processing unit shifts, based on said disparity information output from said disparity information output unit, at least said left eye superimposed information or said right eye superimposed information to provide disparity between this left eye superimposed information and this right eye superimposed information.

3. The stereoscopic image data transmission device according to Claim 1, further comprising:
a disparity information output unit configured to output disparity information between a left eye image made up of said left eye image data, and a right eye image made up of said right eye image data;
wherein said display control information generating unit obtains, based on said disparity information output from said disparity information output unit, disparity information for shift-adjusting each display position of superimposed information included in said first display area and said second display area.

4. The stereoscopic image data transmission device according to Claim 1, wherein said data transmission unit inserts identification information for identifying that said superimposed information data for transmission conforming to the transmission format of said stereoscopic image data is included in said second data stream into said multiplexed data stream.

5. The stereoscopic image data transmission device according to Claim 1, wherein said disparity information included in said display control information generated at said display control information generating unit has sub pixel precision.

6. The stereoscopic image data transmission device according to Claim 1, wherein command information for controlling on/off of each display of superimposed information included in said first display area and said second display area is further included in said display control information generated at said display control information generating unit.

7. The stereoscopic image data transmission device according to Claim 1, wherein the data of said superimposed information is subtitle data,
the display area of said superimposed information data is a region, and
said first display area and said second display area are sub regions set so as to be included in said region.

8. A stereoscopic image data transmission method comprising:
an image data output step arranged to output stereoscopic image data in a predetermined transmission format having left eye image data and right eye image data;
a superimposed information data output step arranged to output the data of superimposed information to be superimposed on an image made up of said left eye image data and said right eye image data;
a superimposed information data processing step arranged to convert the data of said superimposed information output in said superimposed information data output step into superimposed information data for transmission having the data of left eye superimposed information corresponding to said left eye image data included in said stereoscopic image data in said predetermined transmission format, and the data of right eye superimposed information corresponding to said right eye image data included in said stereoscopic image data in said predetermined transmission format;
a display control information generating step arranged to set a first display area corresponding to the display position of said left eye superimposed information, and a second display area corresponding to the display position of said right eye superimposed information to the inside of the display area of said superimposed information data for transmission output in said superimposed information data processing step, and to generate display control information including each area information of said first display area and said second display area, the information of a target frame for displaying each superimposed information included in said first displays area and said second display area, and disparity information for shift-adjusting each display position of superimposed information included in said first display area and said second display area; and
a data transmission step arranged to transmit a multiplexed data stream having a first data stream including said stereoscopic image data output in said image data output step, and a second data stream including said superimposed information data for transmission output in said superimposed information data processing step, and said display control information generated in said display control information generating step.

9. A stereoscopic image data reception device comprising:
a data reception unit configured to receive a multiplexed data stream having a first data stream and a second data stream;
wherein said first data stream includes stereoscopic image data in a predetermined transmission format having left eye image data and right eye image data,
said second data stream includes superimposed information data for transmission and display control information,
said superimposed information data for transmission has the data of left eye superimposed information corresponding to said left eye image data, and the data of right eye superimposed information corresponding to said right eye image data included in said stereoscopic image data in said predetermined transmission format,
and said display control information has each area information of a first display area corresponding to the display position of said left eye superimposed information and a second display area corresponding to the display position of said right eye superimposed information set to the inside of the display area of said superimposed information data for transmission, the information of a target frame for displaying each superimposed information included in said first display area and said second display area, and disparity information for shift-adjusting each display position of superimposed information included in said first display area and said second display area;
further comprising:
an image data obtaining unit configured to obtain said stereoscopic image data from said first data stream that said multiplexed data stream received at said data reception unit has;
a superimposed information data obtaining unit configured to obtain said superimposed information data for transmission from said second data stream that said multiplexed data stream received at said data reception unit has;
a display control information obtaining unit configured to obtain said display control information from said second data stream that said multiplexed data stream received at said data reception unit has;
a display data generating unit configured to generate display data for superimposing and displaying left eye superimposed information and right eye superimposed information as to each of a left eye image and a right eye image based on said superimposed information data for transmission obtained at said superimposed information data obtaining unit;
a display data extracting unit configured to extract the display data of said first display area and said second display area of said display data generated at said display data generating unit based on the area information of said first display area and said second display area that said display control information obtained at said display control information obtaining unit has;
a shift adjusting unit configured to shift-adjusting the position of the display data of said first display area and said second display area extracted at said display data extracting unit based on said disparity information that said display control information obtained at said display control information obtaining unit has; and
a data synthesizing unit configured to superimpose each display data of said first display area and said second display area shift-adjusted at said shift adjusting unit on, of said stereoscopic image data obtained at said image data obtaining unit, the target frame indicated by said target frame information that said display control information obtained at said display control information obtaining unit has, to obtain output stereoscopic image data.

10. The stereoscopic image data reception device according to Claim 9, further comprising:
a digital interface unit configured to transmit said output stereoscopic image data obtained at said data synthesizing unit to an external device.

11. The stereoscopic image data reception device according to Claim 9, with said multiplexed data stream received at said data reception unit including identification information for identifying that said superimposed information data for transmission conforming to the transmission format of said stereoscopic image data is included in said second data stream, further comprising:
an identification information obtaining unit configured to obtain said identification information from said multiplexed data stream received at said data reception unit; and
a superimposed information data identifying unit configured to identify that said superimposed information data for transmission conforming to the transmission format of said stereoscopic image data is included in said second data stream, based on said identification information obtained at said identification information obtaining unit.

12. A stereoscopic image data reception method comprising:
a data reception step arranged to receive a multiplexed data stream having a first data stream and a second data stream;
wherein said first data stream includes stereoscopic image data in a predetermined transmission format having left eye image data and right eye image data,
said second data stream includes superimposed information data for transmission, and display control information,
said superimposed information data for transmission has the data of left eye superimposed information corresponding to said left eye image data, and the data of right eye superimposed information corresponding to said right eye image data included in said stereoscopic image data in said predetermined transmission format,
and said display control information has each area information of a first display area corresponding to the display position of said left eye superimposed information and a second display area corresponding to the display position of said right eye superimposed information set to the inside of the display area of said superimposed information data for transmission, the information of a target frame for displaying each superimposed information included in said first display area and said second display area, and disparity information for shift-adjusting each display position of superimposed information included in said first display area and said second display area;
further comprising:
an image data obtaining step arranged to obtain said stereoscopic image data from said first data stream that said multiplexed data stream received in said data reception step has;
a superimposed information data obtaining step arranged to obtain said superimposed information data for transmission from said second data stream that said multiplexed data stream received in said data reception step has;
a display control information obtaining step arranged to obtain said display control information from said second data stream that said multiplexed data stream received in said data reception step has;
a display data generating step arranged to generate display data for superimposing and displaying left eye superimposed information and right eye superimposed information as to each of a left eye image and a right eye image based on said superimposed information data for transmission obtained in said superimposed information data obtaining step;
a display data extracting step arranged to extract the display data of said first display area and said second display area of said display data generated in said display data generating step based on the area information of said first display area and said second display area that said display control information obtained in said display control information obtaining step has;
a shift adjusting step arranged to shift-adjust the position of the display data of said first display area and said second display area extracted in said display data extracting step based on said disparity information that said display control information obtained in said display control information obtaining step has; and
a data synthesizing step arranged to superimpose each display data of said first display area and said second display area shift-adjusted in said shift adjusting step on, of said stereoscopic image data obtained in said image data obtaining step, the target frame indicated by said target frame information that said display control information obtained in said display control information obtaining step has, to obtain output stereoscopic image data.
